(19) **Europäisches Patentamt / European Patent Office / Office européen des brevets**

(11) **EP 4 181 008 B1**

(12) **EUROPEAN PATENT SPECIFICATION**

(45) Date of publication and mention
of the grant of the patent:
**04.03.2026 Bulletin 2026/10**

(21) Application number: **22207656.4**

(22) Date of filing: **15.11.2022**

(51) International Patent Classification (IPC):
*G06F 30/12* (2020.01)   *G06F 30/23* (2020.01)
*G06F 113/26* (2020.01)

(52) Cooperative Patent Classification (CPC):
**G06F 30/12; G06F 30/23**; G06F 2113/26

(54) **SYSTEMS AND METHODS FOR SEMI-DISCRETE MODELING OF DELAMINATION MIGRATION IN COMPOSITE LAMINATE MATERIALS**

SYSTEME UND VERFAHREN ZUR HALBDISKRETEN MODELLIERUNG VON DELAMINATIONSMIGRATION IN VERBUNDLAMINATMATERIALIEN

SYSTÈMES ET PROCÉDÉS DE MODÉLISATION SEMI-DISCRÈTE DE MIGRATION DE DÉLAMINAGE DANS DES MATÉRIAUX STRATIFIÉS COMPOSITES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.11.2021 US 202163279448 P**

(43) Date of publication of application:
**17.05.2023 Bulletin 2023/20**

(73) Proprietor: **The Regents of The University of Michigan**
**Ann Arbor, MI 48109-2590 (US)**

(72) Inventors:
• **NGUYEN, Minh Hoang**
**Ann Arbor, MI 48109-2590 (US)**
• **WAAS, Anthony M.**
**Ann Arbor, MI 48109-2590 (US)**

(74) Representative: **Witte, Weller & Partner**
**Patentanwälte mbB**
**Postfach 10 54 62**
**70047 Stuttgart (DE)**

(56) References cited:
• NGUYEN MINH HOANG ET AL: "A novel mode-dependent and probabilistic semi-discrete damage model for progressive failure analysis of composite laminates - Part I: Meshing strategy and mixed-mode law", COMPOSITES PART C: OPEN ACCESS, vol. 3, 1 November 2020 (2020-11-01), pages 100073, XP93042337, ISSN: 2666-6820, DOI: 10.1016/j.jcomc.2020.100073
• NGUYEN MINH HOANG ET AL: "A novel mode-dependent and probabilistic semi-discrete damage model for progressive failure analysis of composite laminates - Part II: Applications to unnotched and open-hole tensile specimens", COMPOSITES PART C: OPEN ACCESS, vol. 3, 1 November 2020 (2020-11-01), pages 100071, XP93042340, ISSN: 2666-6820, DOI: 10.1016/j.jcomc.2020.100071
• NGUYEN MINH HOANG ET AL: "Detailed experimental and numerical investigation of single-edge notched tensile cross-ply laminates", COMPOSITE STRUCTURES, ELSEVIER SCIENCE LTD, GB, vol. 279, 8 October 2021 (2021-10-08), XP086852571, ISSN: 0263-8223, [retrieved on 20211008], DOI: 10.1016/J.COMPSTRUCT.2021.114731

**EP 4 181 008 B1**

**(Cont. next page)**

• NAGARAJ M H ET AL: "Compressive damage modeling of fiber-reinforced composite laminates using 2D higher-order layer-wise models", COMPOSITES PART B, ELSEVIER, AMSTERDAM, NL, vol. 215, 17 March 2021 (2021-03-17), XP086577733, ISSN: 1359-8368, [retrieved on 20210317], DOI: 10.1016/ J.COMPOSITESB.2021.108753

**Description**

## FIELD OF THE DISCLOSURE

The present disclosure relates generally to techniques for modeling composite laminate materials and, more particularly, to systems and methods for semi-discrete modeling of delamination migration in composite laminate materials in combination with systems and methods for manufacturing and/or repairing a part using composite laminate materials.

## BACKGROUND

The background description provided herein is for the purpose of generally presenting the context of the disclosure. Work of the presently named inventor, to the extent it is described in this background section, as well as aspects of the description that may not otherwise qualify as prior art at the time of filing, are neither expressly nor impliedly admitted as prior art against the present disclosure.

Fiber reinforced composites are the material of choice for a wide variety of industries where light-weighting is important. This trend is attributed to their specific stiffness, strength, and tailorability. Popular composite material systems are fiber-reinforced systems due to their excellent mechanical properties and high quality manufacturable products. Available as convenient prepreg tapes, they allow an efficient manufacturing process, especially in combination with the automated fiber placement (AFP) technology. However, despite the advances in material and manufacturing technologies, progressive damage and failure modeling of composite structures still remains a great challenge.

The problem is particularly acute because the failure mechanisms in a composite material are particularly complex due to the presence of different length scales (e.g. micro scale with the fiber and matrix constituents and macro/meso scale with the laminae and interfaces). Given the hierarchical structure, the mechanics of composites is a highly multi-scale problem, which results in a variety of damage and failure modes, including their interactions.

Therefore, there is a need for techniques capable of accurately and efficiently modeling the delamination migration (and generally, the full failure progression) in composite laminate materials to enhance the overall design and resulting capabilities of the composite laminate materials.

Publication "A novel mode-dependent and probabilistic semi-discrete damage model for progressive failure analysis of composite laminates - Part I: Meshing strategy and mixed-mode law" by Minh Hoang Nguyen, Anthony M. Waas, COMPOSITES PART C: OPEN ACCESS, vol. 3, 1 November 2020 (2020-11-01), ISSN: 2666-6820, proposes a semi-discrete damage model (SD2M) for the progressive failure analysis (PFA) of composite structures. The presented method utilizes a separation of fiber and matrix failure modes and introduces a material strength distribution to thin strips of matrix-splitting elements in order to capture the progression of transverse crack density. With the proposed meshing strategy, the discreteness is greatly enhanced, while the model remains efficient and simple by using solely continuum elements. Applications of SD2M to several examples are presented in "A novel mode-dependent and probabilistic semi-discrete damage model for progressive failure analysis of composite laminates - Part II: Applications to unnotched and open-hole tensile specimens" by Minh Hoang Nguyen, Anthony M. Waas, COMPOSITES PART C: OPEN ACCESS, vol. 3, 1 November 2020 (2020-11-01), ISSN: 2666-6820.

Publication "Detailed experimental and numerical investigation of single-edge notched tensile cross-ply laminates" by Minh Hoang Nguyen et al., COMPOSITE STRUCTURES, ELSEVIER SCIENCE LTD, GB, vol. 279, 8 October 2021 (2021-10-08), ISSN: 0263-8223, examines failure progression in a cross-ply tensile specimen with a single-edge notch through experiments that provide detailed observations using digital image correlation.

Publication "Compressive damage modeling of fiber-reinforced composite laminates using 2D higher-order layer-wise models" by Nagaraj M. H. et al., COMPOSITES PART B, ELSEVIER, AMSTERDAM, NL, vol. 215, 17 March 2021 (2021-03-17), ISSN: 1359-8368, presents a refined progressive damage analysis of fiber-reinforced laminated composites subjected to compressive loads. A numerical analysis exploits higher-order theories developed using the Carrera Unified Formulation, specifically 2D plate theories with Lagrange polynomials to enhance the kinematic approximation through each ply's thickness resulting in a layer-wise structural model.

## SUMMARY OF THE INVENTION

The invention is defined by the claims.

According to an aspect of the present disclosure, a method for manufacturing and/or repairing a part in accordance with claim 1 is proposed. The method involves a computer implemented computer implemented method for semi-discrete modeling of delamination migration in composite laminate materials includes: receiving, from a user, a specimen geometry and a specimen stacking sequence; creating, by one or more processors, a finite-element (FE) mesh by: generating, using a mesh generation tool, a plurality of plies each shaped according to the specimen geometry, wherein each ply includes (i) a plurality of fibrous strips along a fiber direction and (ii) a bulk element between each of the plurality of fibrous strips, and connecting, using the mesh generation tool, the plurality of plies together based on the stacking sequence by placing a plurality of cohesive elements between each adjacent pair of plies, wherein the FE mesh defines a composite laminate material; and determining, by the one or more processors, a predicted mechanical response of the composite laminate material by: generating a constitutive model corresponding to the composite laminate material based on the FE mesh, and inputting a strain value to the constitutive model to generate the predicted mechanical response; and running manufacturing equipment to manufacture the part, wherein at least one fibrous strip is applied in the composite laminate material in response to the predicted mechanical response.

In a variation of this aspect, connecting the plurality of plies further comprises: connecting, using the mesh generation tool, the plurality of plies together based on the stacking sequence by placing the plurality of cohesive elements between each adjacent pair of plies based on a set of tie constraints. Further in this variation, the set of tie constraints includes enforcing that nodes of the plurality of cohesive elements are located on boundaries of predicted intra-ply matrix cracks.

In another variation of this aspect, connecting the plurality of plies further comprises: partitioning an interlayer between each adjacent pair of plies by defining a plurality of interlayer partition features that surround each fibrous strip included in each respective adjacent pair of plies. Further in this variation, the plurality of interlayer partition features surround each fibrous strip included in each respective adjacent pair of plies by satisfying or exceeding a width tolerance to shift the interlayer partition features toward bulk elements included in each respective adjacent pair of plies. Yet further in this variation, the method includes: placing a cohesive element at least at an intersection of each respective pair of interlayer partition features.

In yet another variation of this aspect, the constitutive model includes mixed-mode conditions to model delamination failure in the composite laminate material.

In another aspect of the present disclosure, a system for manufacturing and/or repairing a part in accordance with claim 8 is proposed. The system comprises a subsystem for semi-discrete modeling of delamination migration in composite laminate materials includes: a user interface; a memory storing a set of computer-readable instructions comprising at least a mesh generation tool; and a processor interfacing with the user interface and the memory, and configured to execute the set of computer-readable instructions to cause the processor to: receive, from a user, a specimen geometry and a specimen stacking sequence; create a finite-element (FE) mesh by: generating, using a mesh generation tool, a plurality of plies each shaped according to the specimen geometry, wherein each ply includes (i) a plurality of fibrous strips along a fiber direction and (ii) a bulk element between each of the plurality of fibrous strips, and connecting, using the mesh generation tool, the plurality of plies together based on the stacking sequence by placing a plurality of cohesive elements between each adjacent pair of plies, wherein the FE mesh defines a composite laminate material; and determine a predicted mechanical response of the composite laminate material by: generating a constitutive model corresponding to the composite laminate material based on the FE mesh, and inputting a strain value to the constitutive model to generate the predicted mechanical response. The system further comprises manufacturing equipment configured to manufacture the part, wherein at least one fibrous strip is applied in the composite laminate material in response to the predicted mechanical response.

In a variation of this aspect, the set of computer-readable instructions further cause the processor to connect the plurality of plies by: connecting, using the mesh generation tool, the plurality of plies together based on the stacking sequence by placing the plurality of cohesive elements between each adjacent pair of plies based on a set of tie constraints. Further in this variation, the set of tie constraints includes enforcing that nodes of the plurality of cohesive elements are located on boundaries of predicted intra-ply matrix cracks.

In another variation of this aspect, the set of computer-readable instructions further cause the processor to connect the plurality of plies by: partitioning an interlayer between each adjacent pair of plies by defining a plurality of interlayer partition features that surround each fibrous strip included in each respective adjacent pair of plies. Further in this variation, the plurality of interlayer partition features surround each fibrous strip included in each respective adjacent pair of plies by satisfying or exceeding a width tolerance to shift the interlayer partition features toward bulk elements included in each respective adjacent pair of plies. Yet further in this variation, the set of computer-readable instructions further cause the processor to connect the plurality of plies by: placing a cohesive element at least at an intersection of each respective pair of interlayer partition features.

In yet another variation, the constitutive model includes mixed-mode conditions to model delamination failure in the composite laminate material.

In yet another aspect of the present disclosure, a non-transitory computer-readable storage medium according to claim 13 having stored thereon a set of instructions, executable by at least one processor, for semi-discrete modeling of delamination migration in composite laminate materials that include: instructions for receiving, from a user, a specimen geometry and a specimen stacking sequence; instructions for creating a finite-element (FE) mesh by: generating, using a mesh generation tool, a plurality of plies each shaped according to the specimen geometry, wherein each ply includes (i) a plurality of fibrous strips along a fiber direction and (ii) a bulk element between each of the plurality of fibrous strips, and connecting, using the mesh generation tool, the plurality of plies together based on the stacking sequence by placing a plurality of cohesive elements between each adjacent pair of plies, wherein the FE mesh defines a composite laminate material; and instructions for determining a predicted mechanical response of the composite laminate material by: generating a constitutive model corresponding to the composite laminate material based on the FE mesh, and inputting a strain value to the constitutive model to generate the predicted mechanical response; and instructions for causing manufacturing equipment to manufacture a part comprising a respective composite laminate material, wherein at least one fibrous strip in the respective composite laminate material is based on the predicted mechanical response.

In a variation of this aspect, the set of instructions further comprise: instructions for connecting, using the mesh generation tool, the plurality of plies together based on the stacking sequence by placing the plurality of cohesive elements between each adjacent pair of plies based on a set of tie constraints. In another variation of this aspect, the set of tie constraints includes enforcing that nodes of the plurality of cohesive elements are located on boundaries of predicted intra-ply matrix cracks.

In another variation of this aspect, the set of instructions further comprise: instructions for partitioning an interlayer between each adjacent pair of plies by defining a plurality of interlayer partition features that surround each fibrous strip included in each respective adjacent pair of plies; and instructions for placing a cohesive element at least at an intersection of each respective pair of interlayer partition features. Further in this variation, the plurality of interlayer partition features surround each fibrous strip included in each respective adjacent pair of plies by satisfying or exceeding a width tolerance to shift the interlayer partition features toward bulk elements included in each respective adjacent pair of plies.

In yet another variation of this aspect, the constitutive model includes mixed-mode conditions to model delamination failure in the composite laminate material.

According to yet another aspect of the present disclosure, a method and a system for manufacturing and/or repairing a part comprising a composite laminate material is disclosed, wherein at least one fibrous strip is applied in the composite laminate material in response to the predicted mechanical response.

## BRIEF DESCRIPTION OF THE DRAWINGS

The figures described below depict various aspects of the system and methods disclosed herein. It should be understood that each figure depicts an embodiment of a particular aspect of the disclosed system and methods, and that each of the figures is intended to accord with a possible embodiment thereof. Further, wherever possible, the following description refers to the reference numerals included in the following figures, in which features depicted in multiple figures are designated with consistent reference numerals.

FIG. 1A illustrates an example system for semi-discrete modeling of delamination migration in composite laminate materials, in accordance various aspects disclosed herein.

FIG. 1B illustrates an example workflow for semi-discrete modeling of delamination migration in composite laminate materials utilizing several components from the example system of FIG. 1A, and in accordance various aspects disclosed herein.

FIG. 2A illustrates an example free meshing of bulk elements included as part of a composite laminate material, as utilized by the example system of FIG. 1A, and in accordance with various aspects disclosed herein.

FIG. 2B illustrates an example structure aligned meshing of fibrous strips and bulk elements included as part of a composite laminate material, as utilized by the example system of FIG. 1A, and in accordance with various aspects disclosed herein.

FIG. 2C illustrates an example discrete meshing of cohesive elements and bulk elements included as part of a composite laminate material, as utilized by the example system of FIG. 1A, and in accordance with various aspects disclosed herein.

FIG. 2D is an example generation sequence of a semi-discrete meshing of fibrous strips and bulk elements included as part of a composite laminate material, as generated by the example system of FIG. 1A, and in accordance with various aspects disclosed herein.

FIG. 3A illustrates an example partitioning of an interlayer within a composite laminate material, in accordance with various aspects disclosed herein.

FIG. 3B is an example generation sequence of a semi-discrete meshing overlay of plies and an interlayer included as part of a composite laminate material, as generated by the example system of FIG. 1A, and in accordance with various aspects disclosed herein.

FIG. 4A depicts an example open-hole tensile (OHT) laminate specimen after partitioning, in accordance with various aspects disclosed herein.

FIG. 4B depicts an example meshing at an elastic region of the example OHT laminate specimen of FIG. 4A, in accordance with various aspects disclosed herein.

FIG. 4C depicts an example meshing at a cut-out region of the OHT laminate specimen of FIG. 4A, in accordance with various aspects disclosed herein.

FIG. 4D depicts an example compatible meshing included as part of the OHT laminate specimen of FIG. 4A, in accordance with various aspects disclosed herein.

FIG. 5 illustrates differences between specimen partitioning and meshing procedures for plies and interlayers of a composite laminate material, in accordance with various aspects disclosed herein.

FIG. 6 is an example graph illustrating a general pre-peak and post-peak stress-strain response of a composite laminate material, in accordance with various aspects disclosed herein.

FIGs. 7A-7E illustrate an example mixed-mode traction-separation law for cohesive behavior of a composite laminate material, in accordance with various aspects disclosed herein.

FIGs. 8A-8D depict example matrix crack patterns and delamination failure of the OHT laminate specimen of FIG. 4A, in accordance with various aspects disclosed herein.

FIG. 9 illustrates an example method for semi-discrete modeling of delamination migration in composite laminate materials, in accordance various aspects disclosed herein.

## DETAILED DESCRIPTION

Numerous computational physics-based models, usually implemented using the finite-element (FE) method, have been developed in the past two decades to predict the progressive damage and failure of composite materials. However, each of these conventional techniques generally suffers from a trade-off between a lack of discreteness resolution and/or consuming a large amount of computational resources. For example, smeared methods are more efficient than discrete methods, but are limited in their capability to accurately capture sharp cracks. Discrete methods offer higher fidelity than smeared methods, but the number of degrees of freedom rises rapidly with the number of represented cracks, resulting in a significant amount of time and processing resources required for model generation. Neither accuracy nor efficiency should be sacrificed, especially because post-processing is critical and non-trivial when user-defined elements (UEL) are utilized alongside finite element analysis software.

By contrast, the systems and methods of the present disclosure provide a semi-discrete damage model that solves these problems experienced by conventional techniques. Namely, the systems and methods of the present disclosure can accurately and efficiently model the delamination migration and overall full failure progression in composite laminate materials to enhance the overall design and resulting capabilities of the composite laminate materials. More specifically, the techniques of the present disclosure are capable of predicting the delamination migration mechanism with an accurate peak load and the total failure due to fiber tensile rupture in a realistic manner for a composite laminate material that was previously unachievable using conventional techniques.

Broadly speaking, the present techniques utilize a finite element (FE) framework to capture the interaction of intra-laminar matrix cracks and inter-laminar failure (e.g., delamination migration) while retaining the capability to predict fiber failure. The plies included as part of the composite laminate material may be modeled with continuum finite elements, and the interlayers (e.g., a thin pure resin layer, adhesive, etc.) may be represented with cohesive elements. A mesh generation tool may create compatible meshes for the interlayers in order to capture a proper load transfer between the laminae and the interfaces. A solver module may then utilize a constitutive model representing the composite laminate material to determine mechanical responses of the ply materials and the interfaces. Accordingly, the ply materials may be modeled in the constitutive model using various pre-peak and post-peak criteria, and the cohesive behavior of the interfaces may be modeled within the constitutive model using a mixed-mode traction-separation law.

Thus, as a result of these and other features described herein, the techniques of the present disclosure generally provide advantages over conventional systems in a number of ways. The efficient meshing procedure utilized as part of the techniques of the present disclosure generates a semi-discrete compatible mesh that captures the matrix-crack-delamination interaction of the interlayers of composite laminate materials in a manner previously unachievable by conventional systems. Further, the mixed-mode formulations included in the constitutive model capture the damage evolution of matrix cracks and delamination, thereby ensuring smooth and simultaneous vanishing of all traction components. Consequently, the techniques of the present disclosure are able to predict the delamination migration and the critical load drops within a composite laminate material more accurately than conventional systems, while outputting details of the matrix cracking and delamination migration.

In particular, the techniques of the present disclosure utilize cohesive elements in order to model delamination of the composite laminate material. Conventional techniques may generally attempt to perfectly match nodes between the plies and the interlayers and/or generate material points that are projections of slave nodes. These conventional techniques therefore suffer from inefficiencies or biases because matching nodes using a semi-discrete mesh are virtually impossible, and delamination predictions may be biased towards the slave surface. However, the mesh generation tool of the present disclosure may connect the interlayers of the material to the plies using tie constraints, thereby improving over these conventional techniques by removing the inefficiencies and biases.

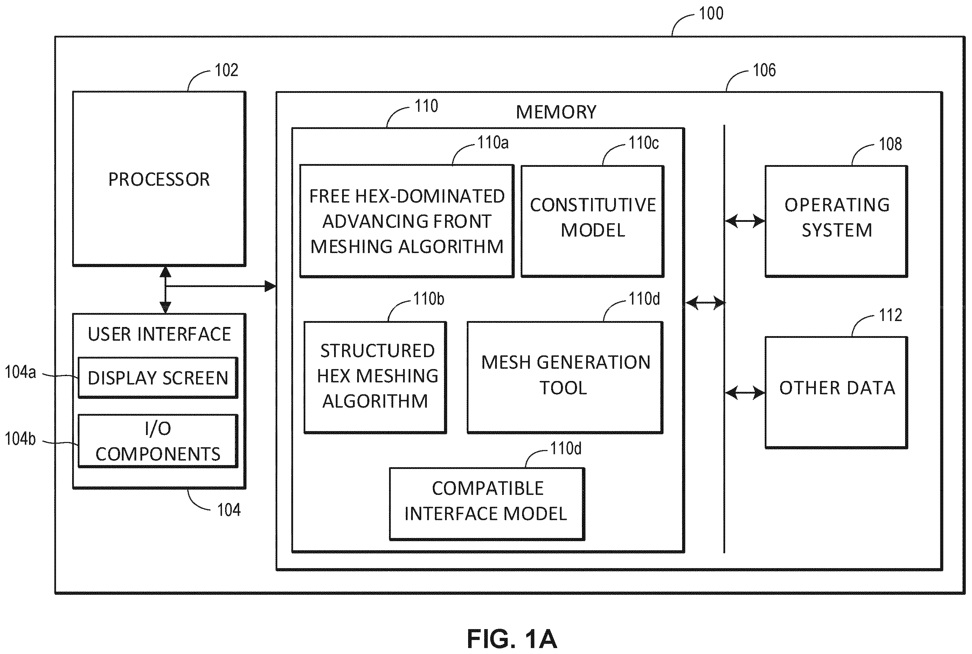

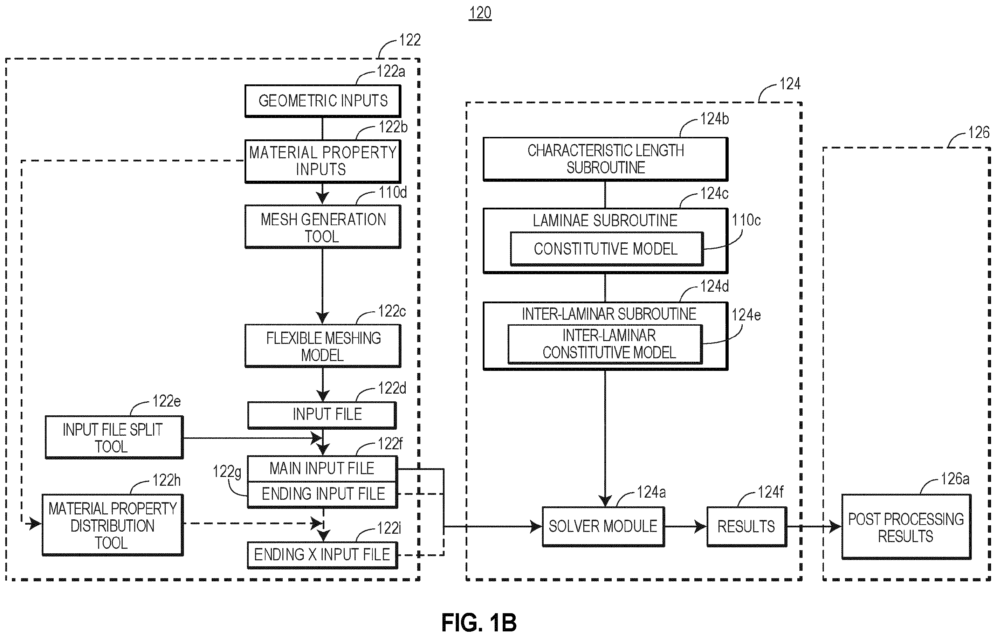

To provide a general understanding of the system(s)/components utilized in the techniques of the present disclosure, FIGs. 1A and 1B illustrate, respectively, an example system 100 and an example workflow 120 utilizing several components of the system 100 that are configured for semi-discrete modeling of delamination migration in composite laminate materials. Accordingly, FIG. 1A provides a general overview of the components, and FIG. 1B describes several of the components and their respective functions in greater detail.

In any event, FIG. 1A illustrates an example system 100 for semi-discrete modeling of delamination migration in composite laminate materials. It should be appreciated that the example system 100 is merely an example and that alternative or additional components are envisioned.

As illustrated in FIG. 1A, the example system 100 may be a user computing device and/or a server that includes a processor 102, a user interface 104, and a memory 106. The memory 106 may store an operating system 108 capable of facilitating the functionalities as discussed herein, as well as other data 112, and a composite laminate modeling application 110 including a free hex-dominated advancing front meshing algorithm 110a, a structured hex meshing algorithm 110b, a constitutive model 110c, a mesh generation tool 110d, and a compatible interface model 110e. Generally, the processor 102 may interface with the memory 106 to access/execute the operating system 108, the other data 112, the free hex-dominated advancing front meshing algorithm 110a, the structured hex meshing algorithm 110b, the constitutive model 110c, the mesh generation tool 110d, and the compatible interface model 110e. The other data 112 may include a set of applications configured to facilitate the functionalities as discussed herein, and/or may include other relevant data, such as display formatting data, etc. For example, the processor 102 may access the operating system 108 in order to execute applications included as part of the other data 112, such as a modeling application (not shown) configured to facilitate functionalities associated with semi-discrete modeling of delamination migration in composite laminate materials, as discussed herein. In certain aspects, the free hex-dominated advancing front meshing algorithm 110a and/or the structured hex meshing algorithm 110b may be provided and/or executed by a suitable commercial software package, such as ABAQUS/CAE, or the like. It should be appreciated that one or more other applications are envisioned. Moreover, it should be understood that any processor (e.g., processor 102), user interface (e.g., user interface 104), and/or memory (e.g., memory 106) referenced herein may include one or more processors, one or more user interfaces, and/or one or more memories.

Generally, the processor 102 may access the memory 106 to execute the mesh generation tool 110d in order to automatically create, partition, and mesh the various portions of a composite laminate material (e.g., plies and interlayers). As described herein, the mesh generation tool 110d may also define and assign material properties, tie portions of the composite laminate material together, and define surfaces, contact interactions, boundary conditions, steps, mass scaling, and output requests.

The mesh generation tool 110d may receive a strip width, a strip spacing, a stacking sequence, a specimen geometry, and/or any other suitable input(s) from a user, and may proceed to partition the material base, such that thin strips of elements (also referenced herein as "element strips", "fibrous strips", and "strips") with the specified strip width are generated along a fiber direction with the specified strip spacing separating each respective element strip. The mesh generation tool 110d may also access or otherwise include instructions that cause the processor 102 to execute the structured hex meshing algorithm 110b and/or the free hex-dominated advancing front meshing algorithm 110a in order to create the meshing within the element strips and the bulk elements separating the element strips. As a result, the mesh generation tool 110d may generate multiple plies that are subsequently connected using the compatible interface model 110e based on the stacking sequence by placing multiple cohesive elements between each adjacent pair of plies (also referenced herein as "neighboring plies") to generate the completed composite laminate material. The completed composite laminate material model may then be analyzed in accordance with the constitutive model 110c to determine a predicted mechanical response and/or a predicted failure type of the composite laminate material.

More specifically, the structured hex meshing algorithm 110b may receive a fibrous strip width and a fibrous strip spacing from a user to determine a type and distribution of fibrous strips as part of a finite element (FE) mesh. The structured hex meshing algorithm 110b may generate a randomized distribution of fibrous strip materials, such that adjacent fibrous strips may be comprised of different fibrous strip materials. However, the structured hex meshing algorithm 110b may generate each fibrous strip at the fibrous strip spacing apart from each adjacent fibrous strip, and the algorithm 110b may generate each fibrous strip with a uniform width, as defined by the user-provided fibrous strip width. Moreover, the structured hex meshing algorithm 110b may generate each of the fibrous strips in a fiber direction, such that the fibrous strip spacing may be maintained between each set of adjacent fibrous strips. Additionally, or alternatively, in certain aspects, the structured hex meshing algorithm 110b may generate fibrous strips in a perpendicular and/or otherwise different direction than the fiber direction.

The free hex-dominated advancing front meshing algorithm 110a may generally receive the FE mesh populated with the fibrous strips from the structured hex meshing algorithm 110b to determine a distribution of bulk elements between each of the fibrous strips. The free hex-dominated advancing front meshing algorithm 110a may implement any suitable type of meshing procedure in accordance with any suitable free mesh algorithm (e.g., sweep mesh with advancing front algorithm). In certain aspects, the free hex-dominated advancing front meshing algorithm 110a and/or the structured hex meshing algorithm 110b may generate a mesh corresponding to the strip elements and/or the bulk elements. For example, regions of the strip elements that include a complex geometry (e.g., near a hole or cut-out) may be meshed using any suitable free mesh technique from the free hex-dominated advancing front meshing algorithm 110a, while regions of the same strip elements that include a less complex geometry may be meshed using a structured hex meshing technique from the structured hex meshing algorithm 110b. As another example, regions of the composite laminate material (e.g., strip elements and bulk elements) that include a less complex geometry (e.g., far from holes, cut-outs, etc.) may be meshed using either a free mesh technique or a structured meshing technique.

The compatible interface model 110e may generally receive the stacking sequence from a user along with multiple plies generated as a result of the free hex-dominated advancing front meshing algorithm 110a and the structured hex meshing algorithm 110b in order to generate interlayers between each adjacent pair of plies. Generally, the compatible interface model 110e may enforce that nodes of the cohesive elements are located at the boundaries of potential intra-ply matrix cracks, as described further herein. The mesh generation tool 110d may utilize these constraints from the compatible interface model 110e to partition the interlayer by generating strips in the directions of the two neighboring plies. In order to maintain a robust tie between the elements of the plies and those of the interlayer, the compatible interface model 110e may also include instructions to widen the strips corresponding to the interlayer by a width tolerance from the original width of the strips in the neighboring plies to shift the nodes slightly towards the bulk regions. Moreover, the compatible interface model 110e may include instructions that the in-plane element size may be smaller than the corresponding element size of the neighboring plies to ensure a proper level of connectivity to both neighboring plies with non-matching meshes. In this manner, the compatible interface model 110e may create semi-discrete and compatible meshes given any arbitrary specimen shape without mesh correction measures, which is not achievable using conventional techniques.

Based on the completed FE mesh resulting from the outputs of the structured hex meshing algorithm 110b, the free hex-dominated advancing front meshing algorithm 110a, the compatible interface model 110e, and the mesh generation tool 110d, the constitutive model 110c may describe the mechanical response of the composite laminate material represented by the completed FE mesh under various stresses and/or strains. In particular, the constitutive model 110c may describe the mechanical response of the composite laminate material represented by the completed FE mesh using a set of pre-peak conditions (prior to mechanical failure), transition criteria (at the point of mechanical failure), and post-peak conditions (after mechanical failure). The constitutive model 110c may include criteria for material behavior corresponding both to the three-dimensional (3D) continuum elements (e.g., intra-laminar elements) and 3D cohesive elements (e.g., inter-laminar elements). In order to generate the constitutive model 110c, a user may define the material constitutive behaviors according to any suitable theory/law. For example, a user may define that Schapery theory (ST) and crack band (CB) methods should represent the continuum elements, and that a mixed-mode traction-separation law should represent the cohesive elements.

All regions of the FE mesh may be modeled with pre-peak non-linearity, but the failure modes of the FE mesh may be separated out into two distinct domains including matrix splitting failure and fiber failure. For example, matrix splitting failure may be only active in the fibrous strips, while fiber failure may be active in every element (e.g., fibrous strips and bulk elements). In fact, by reducing the width of the matrix-splitting strips, the discreteness of the method is highly increased (approaching discrete methods), while the efficiency is maintained by using only continuum elements with smeared crack damage methods (e.g., crack band) for the post-peak failure. Nevertheless, in certain aspects, the failure modes of the FE mesh may not be separated between the fibrous strips and the bulk elements, such that matrix splitting failure and fiber failure may be active in both the fibrous strips and the bulk elements.

Further, the inter-laminar portions of the FE mesh may be modeled with a mixed-mode condition(s), that may require that all tractions within the FE mesh vanish simultaneously at a crack propagation. Namely, the constitutive model 110c may include instructions that when a crack is fully developed, a corresponding crack surface must become traction free.

In this manner, the combination of the structured hex meshing algorithm 110b, the free hex-dominated advancing front meshing algorithm 110a, the constitutive model 110c, the mesh generation tool 110d, and the compatible interface model 110e decomposes the bulk non-linearity and localization zones of the composite laminate material and provides for a proper load transfer pathway through the resulting FE mesh. Consequently, subsequent manufacturing of composite laminate materials may be improved by incorporating the distribution, sizing, spacing, material composition, etc. of the fibrous strips and bulk elements provided in the material models output by the composite laminate modeling application 110. For example, the composite laminate modeling application 110 may be stored in a computing device of a composite laminate material manufacturing plant, and the computing device may run the composite laminate modeling application 110 prior to a run of the manufacturing equipment to determine optimal material characteristics for a particular use-case. Based on the material characteristics (e.g., fibrous strip and bulk element distribution, sizing, spacing, material composition, inter-laminar layer element spacing, adhesive points, etc.) output in a material model by the composite laminate modeling application 110, the manufacturing equipment may manufacture a composite laminate material with those material characteristics to produce an optimally configured composite laminate material for the particular use-case.

Moreover, the mesh generation tool 110d allows a user to quickly and easily adjust the output material model by refining the mesh, adjusting material properties, analysis parameters, and the like without disrupting other aspects of the model. For example, and as discussed further herein, the material model may be split into multiple parts (e.g., files), such that the user may adjust portions of the model confined to a particular file without affecting the other files. As a result, the tool 110d also enables large numbers of simulations to be run for a particular mesh by randomizing the material properties of the mesh without affecting the previously generated mesh.

In any event, the memory 106 may include one or more forms of volatile and/or non-volatile, fixed and/or removable memory, such as read-only memory (ROM), electronic programmable read-only memory (EPROM), random access memory (RAM), erasable electronic programmable read-only memory (EEPROM), and/or other hard drives, flash memory, MicroSD cards, and others.

The example system 100 may further include a user interface 104 configured to present/receive information to/from a user. As shown in FIG. 1A, the user interface 104 may include a display screen 104a and I/O components 104b (e.g., ports, capacitive or resistive touch sensitive input panels, keys, buttons, lights, LEDs). According to some aspects, a user may access the example system 100 via the user interface 104 to review outputs from the free hex-dominated advancing front meshing algorithm 110a, the structured hex meshing algorithm 110b, the constitutive model 110c, the mesh generation tool 110d, the compatible interface model 110e, make various selections, and/or otherwise interact with the example system 100.

In some aspects, the example system 100 may perform the functionalities as discussed herein as part of a "cloud" network or may otherwise communicate with other hardware or software components within the cloud to send, retrieve, or otherwise analyze data. Thus, it should be appreciated that the example system 100 may be in the form of a distributed cluster of computers, servers, machines, or the like. In this implementation, a user may utilize the distributed example system 100 as part of an on-demand cloud computing platform. Accordingly, when the user interfaces with the example system 100 (e.g., by inputting a fibrous strip width, a fibrous strip spacing, a specimen geometry, and/or a stacking sequence), the example system 100 may actually interface with one or more of a number of distributed computers, servers, machines, or the like, to facilitate the described functionalities.

In certain aspects, the example system 100 may communicate and interface with an external server (not shown) via a network(s). The external server may be associated with, for example, an entity that fabricates and/or otherwise purchases composite laminate materials, and may receive the completed FE mesh and/or constitutive model from the example system 100. In particular, the external server may include or support a web server configured to host a website that enables users to submit instructions to the example system 100 for generating the completed FE mesh and/or the constitutive model. For example, the external server may enable a user to submit the fibrous strip width, the fibrous strip spacing, the specimen geometry, the stacking sequence, and/or any other inputs that the example system 100 may use to generate the completed FE mesh and constitutive model.

Further in these aspects, the network(s) used to connect the example system 100 to the external server may support any type of data communication via any standard or technology (e.g., GSM, CDMA, TDMA, WCDMA, LTE, EDGE, OFDM, GPRS, EV-DO, UWB, Internet, IEEE 802 including Ethernet, WiMAX, Wi-Fi, Bluetooth, and others). Moreover, the external server may include a memory as well as a processor, and the memory may store an operating system capable of facilitating the functionalities as discussed herein as well as the free hex-dominated advancing front meshing algorithm 110a, the structured hex meshing algorithm 110b, the constitutive model 110c, and/or the compatible interface model 110e.

Additionally, it is to be appreciated that a computer program product in accordance with an aspect may include a computer usable storage medium (e.g., standard random access memory (RAM), an optical disc, a universal serial bus (USB) drive, or the like) having computer-readable program code embodied therein, wherein the computer-readable program code may be adapted to be executed by the processor(s) 102 (e.g., working in connection with the operating system 108) to facilitate the functions as described herein. In this regard, the program code may be implemented in any desired language, and may be implemented as machine code, assembly code, byte code, interpretable source code or the like (e.g., via Golang, Python, Scala, C, C++, Java, Actionscript, Objective-C, Javascript, CSS, XML). In some aspects, the computer program product may be part of a cloud network of resources.

FIG. 1B illustrates an example workflow 120 for semi-discrete modeling of delamination migration in composite laminate materials utilizing several components from the example system of FIG. 1A, and in accordance various aspects disclosed herein. Generally, the example workflow 120 depicts the flow of data from a user through a pre-processing stage 122, a processing stage 124, and a post-processing stage 126, wherein a composite laminate material mesh is generated, analyzed, and the results are displayed for user interpretation/evaluation.

The example workflow 120 begins with the pre-processing stage 122, where a user may input the geometric inputs 122a and the material property inputs 122b. The geometric inputs 122a may include, for example, the specimen geometry (e.g., the shape and dimensions of the composite laminate material, including any cut-outs such as notches or holes), the fibrous strip width and spacing, the ply stacking sequence (the "layup"), and/or any other suitable values or combinations thereof. The material property inputs 122b may include the material properties of the composite laminate material, such as, for example, ply thickness, ply elastic properties, Schapery parameters, strength values, fracture toughness values, and/or any other suitable values or combinations thereof. Further, the material property inputs 122b may include strength distribution parameters corresponding to the transverse and shear strengths of the composite material, so that each strip may be may be assigned a randomized material strength during the processing stage 124.

Once these inputs 122a, 122b are received, the mesh generation tool 110d may automatically generate the flexible meshing model 122c. As previously mentioned, the mesh generation tool 110d may create any layers associated with the model 122c, partition the layers, and mesh the parts of the layers (e.g., the plies and interlayers). Moreover, the tool 110d may automatically define and assign random material properties, and may define surfaces, contact interactions, boundary conditions, steps, mass scaling, and output requests corresponding to the flexible meshing model 122c. When the flexible meshing model 122c is generated, the model 122c may write an input file 122d that comprises an executable file containing all definitions and defined parameters associated with the model 122c to be evaluated at the processing stage 124.

However, prior to processing, the input file 122d may be split into multiple portions that include different aspects of the original input file 122d. Generally, large models may have correspondingly large input files (e.g., input file 122d), so it may be more efficient and create a more user-friendly, easier access experience to separate the mesh portion of the input file 122d from the material definition portion of the file 122d. Thus, the input file split tool 122e may split the input file 122d into a main input file 122f and an ending input file 122g. The main input file 122f may include mesh definition components, such as element connectivity, nodal coordinates, set definition, surface definitions, sections assignments, and/or any other suitable components or combinations thereof. The ending input file 122g may include constraints, section controls, material definitions, and step definitions, such as boundary conditions, loading, mass scaling, output requests, and/or any other suitable definitions or combinations thereof.

Moreover, in certain aspects, the input file split tool 122e may modify the input files 122f, 122g to define interior surfaces of the plies that are included in the general contact interaction to prevent inter-penetration of elements. In some aspects, the input file split tool 122e may modify the input files 122f, 122g by adding keywords specifying that the characteristic length of the continuum elements is defined in the processing stage 124 (e.g., by characteristic length subroutine 124b).

In any event, when the main input file 122f and the ending input file 122g are generated and modified appropriately, the files 122f, 122g may be analyzed by the solver module 124a as part of the processing stage 124. However, a strength of this workflow 120 is the possibility to perform an uncertainty quantification by running a large number of simulations without editing the mesh (e.g., as included in the main input file 122f). In order to perform such a large number of simulations, the material property distribution tool 122h may receive some/all of the material property inputs 122b, and may edit the ending input file 122g by randomizing the material properties included therein, thereby producing the ending x input file 122i. The material property distribution tool 122h may generate any suitable number of ending x input files 122i in order to create a plethora of randomized material property distributions featuring the same mesh (e.g., as included in the main input file 122f), but that have distinct matrix mode strength distributions by sampling new values from the associated probability distributions (e.g., Monte-Carlo simulations). It should be understood that the input file split tool 122e and the material property distribution tool 122h may be optional components of the example workflow 120, and that similar functionality may be achieved using, for example, a suitable code configured to modify the material definitions within a commercial software package (e.g., ABAQUS/CAE) in which the mesh generation tool 110d may be executed. Regardless, when transitioning to the processing stage 124, the main input file 122f and one of the ending input file 122g and an ending x input file 122i are selected as inputs to the solver module 124a to perform a simulation.

As part of the processing stage 124, the solver module 124a may utilize each of the characteristic length subroutine 124b, the laminae (e.g., individual plies) subroutine 124c (including the constitutive model 110c), and the inter-laminar subroutine 124d to generate the results 124e. The solver module 124a may use the characteristic length subroutine 124b in order to determine the characteristic length of each continuum element. The solver module 124a may utilize the laminae subroutine 124c and the inter-laminar subroutine 124d to determine the material constitutive behavior of the intra-laminar materials and the inter-laminar materials, respectively. It should be understood that the solver module 124a may utilize additional files not shown in FIG. 1B, such as supplementary routines for calculation of internal variables, solving equations to determine the micro damage (e.g., Schapery) parameter.

More specifically, the laminae subroutine 124c may include the constitutive model 110c, which may combine Schapery theory, failure criteria, and mixed-mode crack band in order to model the effects of intra-laminar stress and strain conditions on the composite laminate material. The laminae subroutine 124c may also implement element-wise global-local randomization to further randomize material properties of the composite laminate material by a scaling factor. The subroutine 124c may apply the scaling locally, for example, at every integration point of every element, and the scaling factor may be calculated using a global field function based on the coordinates within the model. This randomization may be applied by the laminae subroutine 124c particularly to randomize the strip element strengths, bulk element properties, and may also be applied to elastic properties, interlayer properties, and even properties within individual strip elements.

Additionally, the inter-laminar subroutine 124d may include an inter-laminar constitutive model 124e that generally models the effects of inter-laminar stress and strain conditions on the composite laminate material. The inter-laminar constitutive model 124e may include mixed-mode condition(s), that may require all tractions within the FE mesh to vanish simultaneously at a crack propagation. Namely, the inter-laminar constitutive model 124e may include instructions that when a crack is fully developed, a corresponding crack surface must become traction free. In certain aspects, and as previously mentioned, the constitutive model 110c may include suitable theories/models/laws sufficient to model both the intra-laminar and the inter-laminar material responses, such that the inter-laminar constitutive model 124e may be included as part of the constitutive model 110c.

When the solver module 124a has applied/utilized each subroutine 124b, 124c, 124d, the module 124a may output the results 124f for analysis/evaluation during the post-processing stage 126. In particular, the results 124f as displayed to a user may include the post-processing results 126a, including the mechanical response of the composite laminate material under the simulated stresses and strains during the execution of the solver module 124a, and the failure progression (e.g., delamination migration) of any failures within the composite laminate material as a result of the stresses and strains simulated by the solver module 124a exceeding the material tolerances. For example, the post-processing results 126a may include plots, graphs, charts, and/or any other suitable display configured to illustrate the mechanical response, the failure progression, and/or any other suitable result or combinations thereof for a user.

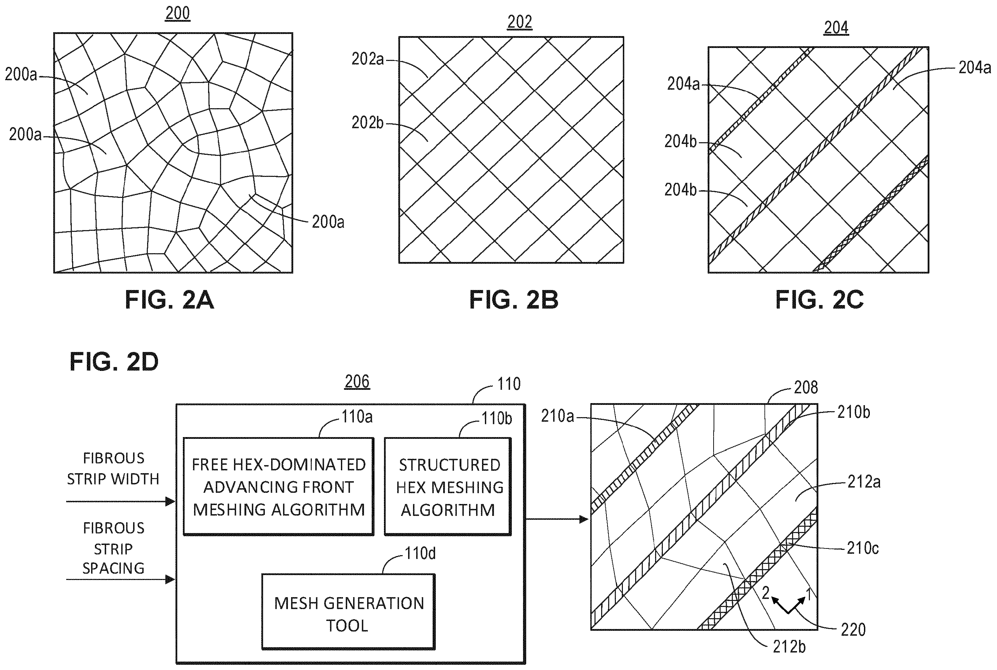

In order to generate the plies for the FE mesh, the systems and methods of the present disclosure may utilize multiple modeling techniques (e.g., meshes). For example, each of FIGs. 2A-2C illustrate various meshes and/or meshing techniques that may be utilized as part of the techniques of the present disclosure. Namely, FIG. 2A illustrates an example free meshing 200 of bulk elements 200a included as part of a composite laminate material, as utilized by the example system of FIG. 1A, and in accordance with various aspects disclosed herein. Generally, the bulk elements 200a illustrated in FIG. 2A may constitute a large portion (e.g., a majority) of the resulting composite laminate material, and may be disposed in between any fibrous strips. As previously mentioned, the bulk elements 200a between the matrix-splitting strips may not fail in matrix modes. As a result, and as illustrated in FIG. 2A, the bulk elements 200a may have arbitrary shapes, such that a free mesh can be used for most of the elements comprising the FE mesh. This significantly reduces the processing resources/time that are otherwise necessary to produce a well-defined shape for the bulk elements 200a, and by extension, the completed FE mesh. Regardless, as previously mentioned, the arbitrary shapes comprising the bulk elements 200a may be generated using a structured mesh (e.g., by the structured hex meshing algorithm 110b) and/or a free mesh (e.g., by the free hex-dominated advancing front meshing algorithm 110a) based on the geometry of the region of the composite laminate material in which the bulk elements 200a are located. In certain aspects, the element size of the bulk elements 200a are allowed to exceed the Bazant limit required in the transverse direction. As a result, only the Bazant limit for the fiber-direction may be required.

FIG. 2B illustrates an example structure aligned meshing 202 of fibrous strips 202a and bulk elements 202b included as part of a composite laminate material, as utilized by the example system of FIG. 1A, and in accordance with various aspects disclosed herein. As illustrated in FIG. 2B, the fibrous strips 202a are each generated in a uniform direction, and at a uniform spacing. Additionally, the bulk elements 202b may be uniformly generated such that each bulk element 202b has substantially similar and/or identical dimensions and each fibrous strip 202a may be separated from an adjacent strip by the width of a single bulk element 202b.

FIG. 2C illustrates an example discrete meshing 204 of cohesive elements 204a and bulk elements 204b included as part of a composite laminate material, as utilized by the example system of FIG. 1A, and in accordance with various aspects disclosed herein. As illustrated in FIG. 2C, the cohesive elements 204a are each generated in a uniform direction, and at a uniform spacing. Each cohesive element 204a may not have in-plane stiffness, such that the elements 204a may not capture fiber stiffness (e.g., resulting from the fibrous strips). Moreover, the cohesive elements 204a may be generated at a relatively small thickness (e.g., 0 thickness), and may not be included as part of the intra-ply meshing techniques described herein. However, in certain aspects, the cohesive elements 204a may be included as part of the intra-ply meshing techniques described herein to, for example, help model matrix cracking within the composite laminate material. Additionally, the bulk elements 204b may be uniformly generated such that each bulk element 204b has substantially similar and/or identical dimensions and each cohesive element 204a may be separated from adjacent cohesive elements by the width of multiple bulk elements 204b (illustrated in FIG. 2C as two bulk elements 204b).

FIG. 2D is an example generation sequence 206 of a semi-discrete meshing 208 of fibrous strips and bulk elements included as part of a composite laminate material, as generated by portions of the example system of FIG. 1A, and in accordance with various aspects disclosed herein. For ease of discussion, it is to be understood that the composite laminate modeling application 110 and each of the elements included therein (e.g., free hex-dominated advancing front meshing algorithm 110a, structured hex meshing algorithm 110b, and the mesh generation tool 110d) may be executed by one or more processors (e.g., processor 102) in order to perform the actions described herein.

As illustrated in FIG. 2D, the composite laminate modeling application 110 may receive a fibrous strip width and a fibrous strip spacing from a user, and the application 110 may then output the semi-discrete meshing 208 using the mesh generation tool 110d, which may itself access or otherwise include instructions causing the processors to execute the free hex-dominated advancing front meshing algorithm 110a and the structured hex meshing algorithm 110b. The user may select a small fibrous strip width relative to the overall size of the composite laminate material and/or the bulk elements 212a, 212b in order to enhance the discreteness and sharpness of the resulting matrix cracks, as described herein. The mesh generation tool 110d may then partition the meshing 208, such that the each of the fibrous strips 210a, 210b, 210c are generated along the fiber direction (not shown) with the fibrous strip spacing in between each strip. The mesh generation tool 110d may also generate the bulk elements 212a, 212b between the fibrous strips 210a, 210b, 210c, and both the bulk elements 212a, 212b and the fibrous strips 210a, 210b, 210c may be generated using either structured and/or free meshing techniques, as described further herein. However, it should be appreciated that the fibrous strips (e.g., fibrous strips 202a, 204a, 210a, 210b, 210c) described herein may follow any suitable fiber path, such as 3D fiber paths that include a 3D curve, and the mesh generation tool 110d may partition the fibrous strips along the corresponding 3D curve. For example, fibrous strip 210a may be a steered fiber strip placed within the composite laminate by robotic automation and/or a portion of a tow (bundle of fibers) that collectively follows a 3D curve. In this example, the mesh generation tool 110d may define partitions along the 3D fiber path which the fibrous strip 210a follows.

Moreover, during the partitioning process, the mesh generation tool 110d may define each fibrous strip 210a, 210b, 210c as a cell, which may be further defined as a geometric set. Each fibrous strip 210a, 210b, 210c that is part of a particular geometric set may be assigned the same material properties. Accordingly, the mesh generation tool 110d may assign each fibrous strip 210a, 210b, 210c (and/or each unique geometric set of strips) a unique randomized strength property, such as transverse and shear strength, in order to achieve a random material strength distribution throughout the composite laminate material.

Generally, a realistic composite laminate material may have randomized strength properties throughout the material. Thus, for the composite laminate modeling application 110 to model the material as realistically as possible, the strength properties of the FE mesh may be randomized throughout the specimen. This may be justified by experimental observations on the progressive nature of crack accumulation (e.g. in a cross-ply tensile test), which have indicated an increase of transverse crack density with rising axial strain.

Crack accumulation may be progressive for several reasons, each of which may be accounted for by the composite laminate modeling application 110 during the development of the semi-discrete meshing 208. Once a crack develops within the composite laminate material, the stresses near that crack may relax and rise away slowly according to shear lag theory, such that no other crack may occur within a certain shear lag length of the crack. These matrix cracks usually provide stress concentrations at ply-interfaces for delamination to initiate, which redistributes and relaxes the stresses around a transverse crack. Further, the inherent nonuniformity of the composite laminate material causes the strength of the material to vary spatially. In fact, strength values measured in lamina tests may be the lower bound of an actual material strength distribution.

Conventionally, a meso-scale model can capture only a few of these effects with limited fidelity. In order to capture the shear lag effect and its strain and stress gradients within a small length scale, a very fine mesh in the in-plane and thickness directions would be required. Some conventional techniques use micro-mechanical models with explicit modeling of fibers and matrix, to capture the onset and propagation of matrix cracks. However, using these methods lead to an unreasonable computation cost associated with coupon or structural level modeling.

Most of the conventional numerical models may capture transverse cracks, but are not suited for a progressive failure analysis of actual composite structures. Typically, one element per width is used, and this issue becomes more complicated in a FE mesh of a realistically-sized problem having multi-dimensionality (e.g., having elements in x- and y- directions). If applying a distribution to all elements in a generic mesh with multiple elements along the width and length direction, the same progression of transverse cracking cannot be achieved.

Practically speaking, the stress along the width and length direction of a composite laminate material is almost uniform. If a row of elements along the width direction is assigned with a distribution, there is a high probability that one of the elements has a low strength due to the distribution. This probability increases with the number of elements, and as a result, there is a high probability that multiple cracks will occur at the same time at an applied strain within a few increments. To overcome this issue, the composite laminate modeling application 110 employs a separation of failure modes when generating the semi-discrete meshing 208, where the strength for matrix cracking may be distributed along the 22-direction only (e.g., perpendicular to the matrix cracks).

Moreover, the type of probability distribution may be carefully chosen for the FE mesh generated by the composite laminate modeling application 110. The semi-discrete meshing 208 may include a finite number of elements, such that it is difficult to capture the tails of a probability distribution (e.g. Weibull or Gaussian). Capturing the left tail is important, as it represents the weak locations in the corresponding composite laminate material. Thus, the composite laminate modeling application 110 may utilize a uniform distribution, which may be further justified because the semi-discrete meshing 208 may include evenly spaced fibrous strips 210a, 210b, 210c. Each of the fibrous strips 210a, 210b, 210c may represent a weakest material point within a band around that strip. If that band of material points within a probabilistic distribution is reduced to a strip, the overall distribution (applied to the fibrous strips) may be altered. In fact, the choice of a uniform probability density function (PDF) may provide a high degree of alignment with experimental data to an extent that is otherwise unachievable with conventional techniques. Regardless, it should be understood that any suitable probability density function may be used within the composite laminate modeling application 110.

In any event, the semi-discrete meshing 208 may include a first fibrous strip 210a, a second fibrous strip 210b, and a third fibrous strip 210c. Each of the first, second, and third fibrous strips 210a, 210b, 210c may be comprised of different materials (indicated by different patternings). Of course, it will be appreciated that each of the fibrous strips 210a, 210b, 210c may be comprised of similar materials, identical materials, and/or any other suitable materials or combinations thereof. Regardless, the composite laminate modeling application 110 may randomize the material distribution of each of the fibrous strips 210a, 210b, 210c, such that the different materials used to comprise the fibrous strips may be randomly distributed throughout the resulting FE mesh. In this manner, the strength properties of the FE mesh may be randomized to more accurately reflect a realistic modeling of a tangible composite laminate material.

The semi-discrete meshing 208 may also include bulk elements 212a, 212b including a first bulk element 212a and a second bulk element 212b. As illustrated in FIG. 2D, the bulk elements 212a, 212b may have non-uniform shapes, such that the first bulk element 212a has a different dimensionality from the second bulk element 212b. Similarly, the composite laminate modeling application 110 (e.g., the free hex-dominated advancing front meshing algorithm 110a) may generate each of the bulk elements 212a, 212b included as part of the semi-discrete meshing 208 with different individual dimensions without violating the fibrous strip spacing specified by the user. Thus, each individual bulk element (e.g., first bulk element 212a, second bulk element 212b) may have unique/different dimensions, but the fibrous strip spacing between the fibrous strips 210a, 210b, 210c may remain constant.

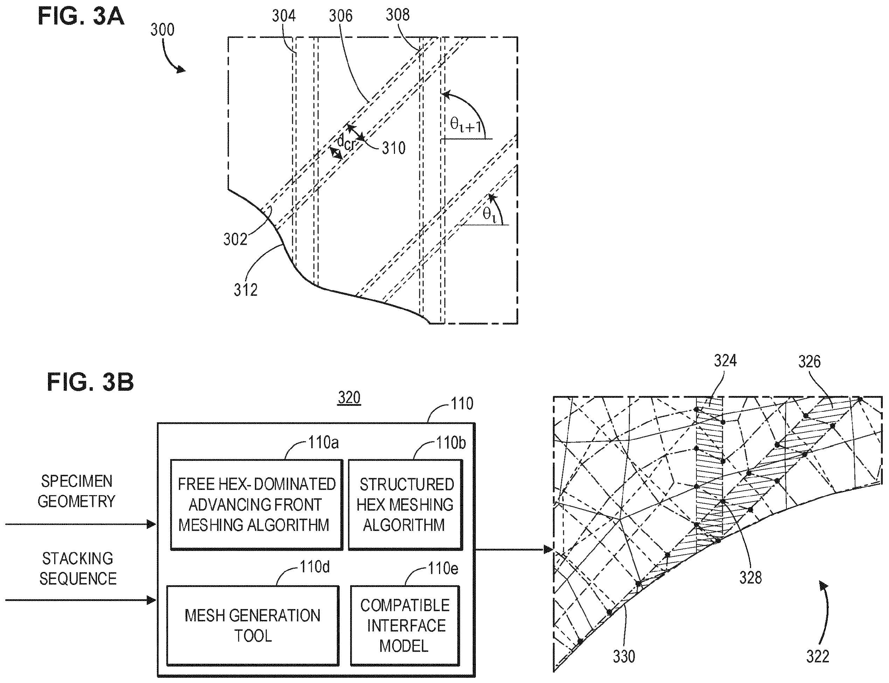

FIG. 3A illustrates an example partitioning 300 of an interlayer within a composite laminate material, in accordance with various aspects disclosed herein. Generally, as previously mentioned, partitioning of the interlayer includes enforcing that the nodes of the cohesive elements are at the boundaries of potential intra-ply matrix cracks (also referenced herein as "predicted" intra-ply matrix cracks). The potential intra-ply matrix cracks may be determined based on the positioning of the elements comprising the composite laminate material. For example, the fibrous strip elements are generally defined to capture the matrix cracking within the material, such that matrix cracking may be confined to occur along the fibrous strips. In this manner, the composite laminate modeling application 110 may enforce that the nodes of the cohesive elements are near the boundaries of the fibrous strip elements included within the adjacent plies.

More specifically, and in reference to FIG. 3A, the example partitioning 300 may include a set of first ply partition features 302, a set of second ply partition features 304, a set of interlayer partition features 306, and a set of fixed nodes 308. The sets of ply partition features 302, 304 may have a ply width $d_{cr}$, and the set of interlayer partition features 306 may be displaced relative to the sets of ply partition features 302, 304 (e.g., wider) by a tolerance 310. Moreover, the sets of ply partition features 302, 304 may each have a respective angular orientation within the respective ply (e.g., features 302 at angle $\theta_i$ and features 304 at angle $\theta_{i+1}$), and the set of interlayer partition features 306 may have identical angular orientations in order to surround and run in parallel with the sets of ply partition features 302, 304. The example partitioning 300 may also include an arbitrary boundary 312, such as a cut-out or a free edge.

In certain embodiments, the example partitioning 300 may not include a set of interlayer partition features 306 proximate to each set of first ply partition features 302 and/or each set of second ply partition features 304. Namely, in these embodiments, the example partitioning 300 may include certain subgroups and/or portions of the set of first ply partition features 302 and/or each set of second ply partition features 304 where there are no interlayer partition features 306 disposed proximate to those subgroups and/or portions. For example, the example partitioning 300 may include a set of interlayer partition features 306 proximate to every other set of first ply partition features 302 and/or each set of second ply partition features 304, such that approximately half of the set of first ply partition features 302 and/or each set of second ply partition features 304 do not have a proximate set of interlayer partition features 306.

In order to generate the example partitioning 300, the compatible interface model 110e in combination with the mesh generation tool 110d may place integration points of cohesive elements at the corners of the intersection points of the sets of ply partition features 302, 304. The mesh generation tool 110d may then partition strips in the directions of the two neighboring plies (e.g., represented by the sets of ply partition features 302, 304), namely $\theta_i$ and $\theta_{i+1}$. To maintain a robust tie between the elements of the plies and those of the interlayer, the tool 100d may widen the strips included in the set of interlayer partition features 306 by a tolerance from the ply width $d_{cr}$ to shift the set of fixed nodes 308 slightly towards the bulk regions of the composite laminate material.

FIG. 3B is an example generation sequence 320 of a semi-discrete meshing overlay of plies and an interlayer included as part of a composite laminate material, as generated by the example system of FIG. 1A, and in accordance with various aspects disclosed herein. As illustrated in FIG. 3B, the composite laminate modeling application 110 may receive a specimen geometry and a stacking sequence from a user, and the application 110 may then output the semi-discrete meshing 322 using the mesh generation tool 110d, which may itself access or otherwise include instructions causing the processors to execute the free hex-dominated advancing front meshing algorithm 110a and the structured hex meshing algorithm 110b. The mesh generation tool 110d may partition the meshing 322 for each ply, such that the first strip 324 corresponds to a first ply, and the second strip 326 corresponds to a second ply. The mesh generation tool 110d may then generate the nodes 328 within the cohesive layer connecting the first ply and the second ply, while accommodating the material boundary 330 (e.g., cut-out, free edge).

Generally, the composite laminate modeling application 110 may generate nodes 328 at any suitable point within the cohesive layer between two neighboring plies (e.g., at any/all vertices of meshing elements within the cohesive layer). However, the nodes of the cohesive layer that will interact with matrix cracks first (e.g., node 328, referenced herein as "compatible nodes") are represented by dots emphasizing their placement near one or both of the first strip 324 and/or the second strip 326, thereby increasing the chances that the node will indeed interact with a matrix crack before other nodes disposed further from the strips 324, 326 within the composite laminate material. The composite laminate modeling application 110 may generate elements of the cohesive layer at in-plane element sizes relatively smaller than that of the plies to ensure a proper level of connectivity to both neighboring plies (e.g., the first ply and the second ply) with non-matching meshes (e.g., first strip 324 and second strip 326). As a result, the composite laminate modeling application 110 may create semi-discrete and compatible meshes of cohesive layers within composite laminate materials given any arbitrary specimen geometry without implementing mesh correction measures.

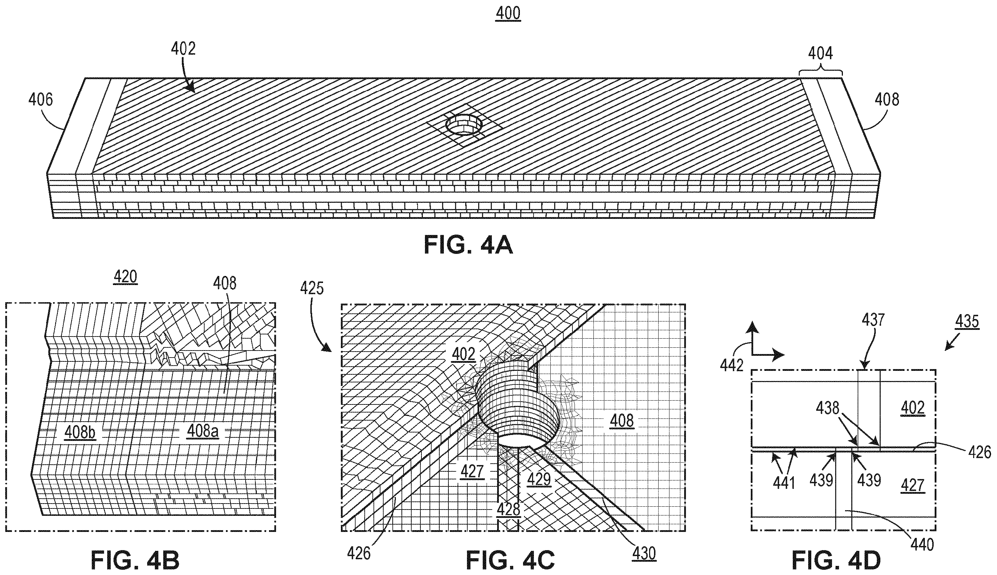

FIG. 4A depicts an example open-hole tensile (OHT) laminate specimen 400 after partitioning, in accordance with various aspects disclosed herein. Generally, the OHT laminate specimen 400 may include multiple plies (e.g., top 45 ply 402), each meshed with a semi-discrete meshing and a random material distribution. Each ply of the specimen 400 may include an elastic region 404 that is clamped and/or otherwise supported at the edge 406. More specifically, the OHT laminate specimen 400 may be an output of the composite laminate modeling application 110. It should be appreciated that OHT specimen 400 may be and/or include any suitable cut-out or notch.

For example, the composite laminate modeling application 110 may output the OHT laminate specimen 400 as a ply-scaled, 4 millimeters (mm) thick laminate with a stacking sequence $[45_4/90_4/-45_4/0_4]_s$, a hole diameter of 3.175 mm, a width of 16 mm and a gage length of 64 mm. The material system may be IM7/8552 with a cured ply thickness of 0.125 mm. As illustrated in FIG. 4A, the application 110 may apply a semi-discrete mesh to the entire gage length of the specimen 400. In particular, the 0 ply 408 may be meshed with matrix-split strips extending throughout the entire specimen length, including the elastic regions 404. As illustrated in the example meshing 420 of FIG. 4B, the 0 ply 408 includes matrix-split strips extending through the meshed interior 408a and the meshed elastic region 408b.

More generally, and as illustrated in the example meshing 425 of FIG. 4C, the mesh details and the assembly structure of the OHT laminate specimen 400 may vary throughout the plies. For example, the OHT laminate specimen 400 may include the top 45 ply 402 that includes a 45° meshing, a top 45/90 interlayer 426 that includes a 45°/90° meshing, a top 90 ply 427 that includes a 90° meshing, a top 90/-45 interlayer 428 that includes a 90°/-45° meshing, a top -45 ply 429 that includes a -45° meshing, a top -45/0 interlayer 430 that includes a -45°/0° meshing, and the 0 ply 408 that may include a 0° meshing. It should be understood that the plies/interlayers illustrated in FIG. 4C are referenced as "top" plies/interlayers because they are illustrated as plies/interlayers above or otherwise on top of the remaining plies/interlayers of the OHT laminate specimen 400, as indicated by the positive z-direction of the coordinates 442 in FIG. 4D. As such, it will be appreciated that the specimen 400 may include additional plies/interlayers defining a bottom portion of the specimen 400 (e.g., below the 0 ply 408) that are stacked symmetrically to the plies/interlayers of the top portion of the specimen 400 (e.g., starting with a bottom 0/-45 interlayer and ending with a bottom 45 ply).

The application 110 may generally model each ply with continuum elements with reduced integration and enhanced hourglass control, while the interlayers may be represented with cohesive elements. As illustrated in by the example compatible meshing 435 of FIG. 4D, the cohesive interlayers are relatively thin compared to the plies. Namely, the top 45/90 interlayer 426 is relatively thin compared to the top 45 ply 402 and the top 90 ply 427, between which the interlayer 426 is displaced. For example, the interlayer 426 may be approximately 0.002 mm thin, which may be less than the fiber diameter within the neighboring plies 402, 427 of approximately 5 micrometers ($\mu$m). The interface between top 45/90 interlayer 426 and the neighboring plies 402, 427 may include several compatible nodes where cohesive elements may be placed to join the interlayer 426 to a respective neighboring ply 402, 427. The compatible nodes 438 may join the interlayer 426 to the top 45 ply 402 on both sides of the matrix-split strip 437 contained within the ply 402. Similarly, the compatible nodes 439 may join the interlayer 426 to the top 90 ply 427 on both sides of the matrix-split strip 440 contained within the ply 427. Further, the interlayer 426 may include several ties 441 that join the interlayer 426 to the neighboring plies 402, 427 without constraining the location of the ties 441 to a matrix-split strip 437, 440.

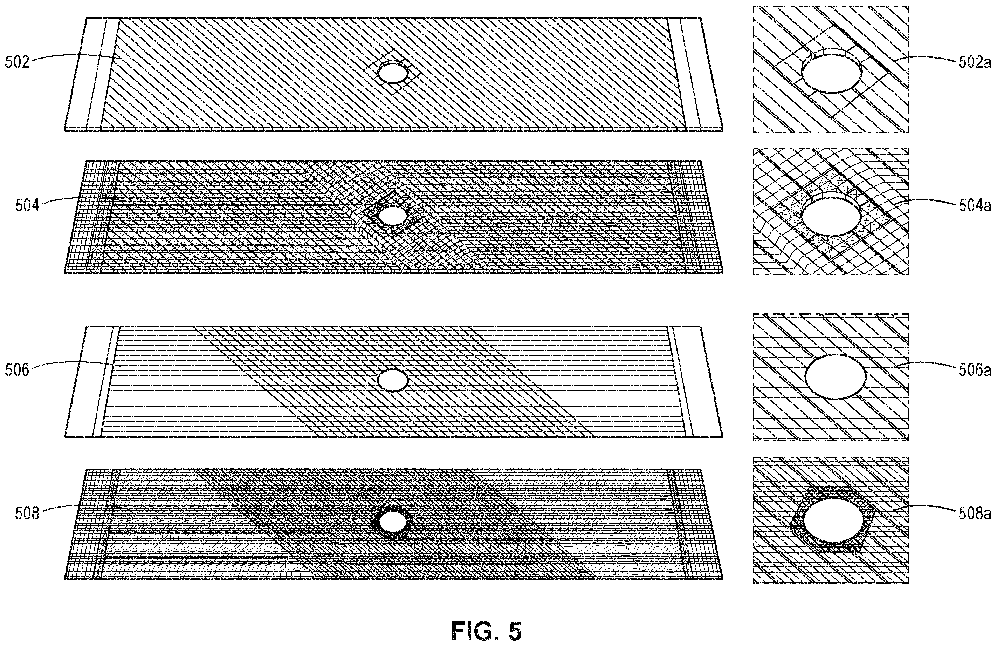

FIG. 5 illustrates differences between specimen partitioning and meshing procedures for plies and interlayers of a composite laminate material, in accordance with various aspects disclosed herein. Generally, FIG. 5 includes a ply represented by the partitioned ply 502 and the meshed ply 504. As previously described, the meshed ply 504 may represent a subsequent step of the process applied by the composite laminate modeling application 110 relative to the partitioned ply 502 in order to generate a completed composite laminate material. For example, the application 110 may generate the partitioned ply 502 in accordance with the partitioning processes described herein, and may thereafter overlay a mesh onto the partitioned ply 502 to generate the meshed ply 504. This difference between the partitioned ply 502 and the meshed ply 504 is more explicitly represented in the contrast between the partitioned ply detailed view 502a and the meshed ply detailed view 504a. In other words, the partitioned ply detailed view 502a features the matrix-split strips and general partitioning associated with the central hole. The meshed ply detailed view 504a additionally includes the meshing generated by the application 110.

Moreover, FIG. 5 includes an interlayer represented by the partitioned interlayer 506 and the meshed interlayer 508. As previously described, the meshed interlayer 508 may represent a subsequent step of the process applied by the composite laminate modeling application 110 relative to the partitioned interlayer 506 in order to generate a completed composite laminate material. For example, the application 110 may generate the partitioned interlayer 506 in accordance with the partitioning processes described herein, and may thereafter overlay a mesh onto the partitioned interlayer 506 to generate the meshed interlayer 508. This difference between the partitioned interlayer 506 and the meshed interlayer 508 is more explicitly represented in the contrast between the partitioned interlayer detailed view 506a and the meshed interlayer detailed view 508a. In other words, the partitioned interlayer detailed view 506a features the strips corresponding to partitioned ply 502 and a neighboring ply (not shown)). The meshed interlayer detailed view 508a additionally includes the meshing generated by the application 110. As shown in the meshed interlayer detailed view 508a, the regions near the hole may be meshed with different element sizes and meshing algorithms (e.g., a free mesh near the hole).

As illustrated in FIG. 5, the partitioned interlayer 506 has partitioning features in two directions, creating a large number of partition plane intersections. Generally speaking, as more partitioning planes intersect with one another, the pre-processing time required to generate the full mesh (e.g., in meshed interlayer 508) increases. Accordingly, as illustrated in FIG. 5, the composite laminate modeling application 110 may apply the semi-discrete compatible mesh to the interlayer with a limited and/or otherwise reduced number of partitioning features to correspondingly reduce the pre-processing time, and thereby make the entire composite laminate material generation process more efficient. For example, with a limited number of partitioning features, the pre-processing (e.g., the pre-processing stage 122) may take on the order of only a few minutes. As a result, the full meshing procedure, described herein, may only require approximately 10 to 20 minutes. Further, it should be understood that the partitioning features in any particular direction may extend through any suitable portion of the material. For example, partitioning features along a 0 direction may extend through the entire gage length of the material at the -45/0 interface (e.g., within the top -45/0 interlayer 430). Additionally, or alternatively, cohesive properties within the interlayers may be uniform and/or randomized, as specified by a user (e.g., within the inter-laminar subroutine 124d).

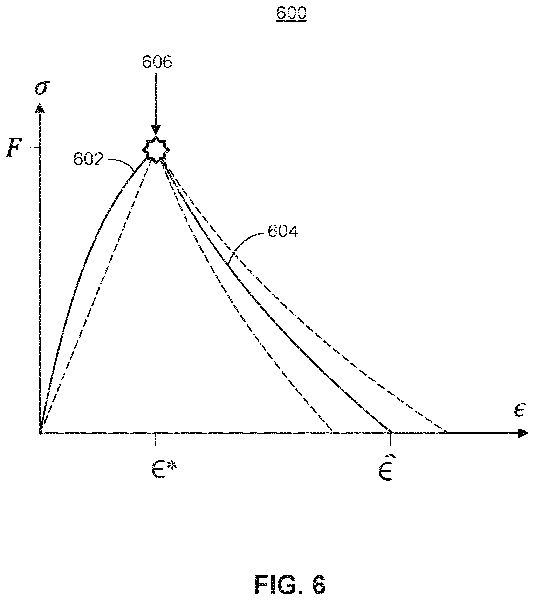

FIG. 6 is an example graph 600 illustrating a general pre-peak and post-peak stress-strain response of a composite laminate material, in accordance with various aspects disclosed herein. The constitutive model 110c may generally model the behavior of each composite laminate material generated by the composite laminate modeling application 110 under stress/strain conditions that may appear similar to the example graph 600. The bulk elements (e.g., bulk elements 212a, 212b) and the fibrous strips (e.g., fibrous strips 210a, 210b, 210c) may be modeled with the same constitutive model to minimize the overall complexity particularly because the distinct failure behaviors are due to the material strength distribution.

Additionally, or alternatively, the user may input a relatively large fibrous strip spacing to, for example, generate a relatively large material specimen and/or to reduce overall computational load. With a relatively large fibrous strip spacing, the corresponding bulk elements (e.g., bulk elements 212a, 212b) may be enhanced to capture some degree of a matrix splitting failure mode as well as a fiber failure mode. As a result, the constitutive behavior for these enhanced bulk elements may differ slightly from the constitutive behavior of the corresponding fibrous strip elements based on their characteristic (i.e., element) size. If the enhanced bulk elements are sufficiently small (e.g., comparable to the width of the fibrous strip elements), then the constitutive model may be the same for both elements.

However, if the bulk element size is large, a residual stiffness/modulus may be imposed for the enhanced bulk elements. In these instances, a crack density parameter may be introduced to quantify the damage state, and each enhanced bulk element may capture multiple matrix cracks in a smeared manner by utilizing continuum damage mechanics. Namely, the fibrous strip elements may capture sharp matrix cracks, and the enhanced bulk elements may capture additional damage in a smeared manner that may correspond to the accumulation of multiple matrix cracks occurring within one or more enhanced bulk elements. Hence, this approach may be referenced as a "mixed-fidelity" or "multi-fidelity" damage model.

In any event, generally, the constitutive response of a composite laminate material may include a pre-peak response 602 and a post-peak softening domain, represented by the post-peak response 604. The pre-peak shear behavior is usually non-linear in nature due to micro-cracking (shear hackling) in the matrix. However, these micro-cracks also have an effect on the transverse stiffness of the material. Thus, to capture the material non-linearity while accounting for the adverse effects of micro-cracking on material transverse stiffness, the constitutive model 110c may include Schapery theory (ST) to accurately capture the micro-damage in a composite laminate material. Of course, it is to be understood that any suitable modeling theory may be applied, such as, for example, a multiscale model that captures the stiffness degradation of the composite analytically by the concentric cylinder model (CCM) and the generalized self-consistent method (GSCM).

In any event, a failure criterion may trigger the transition (represented by the transition point 606) from the pre-peak response 602 into the post-peak response 604. Physically, when a crack propagates and becomes traction-free, all tractions at the crack tip must vanish simultaneously. However, from a numerical point of view, a mixed-mode law may be critical to minimize oscillations due to sudden stress drops. As a result, the constitutive model 110c may also incorporate a crack band model to account for these physical properties attendant to crack propagation within a composite laminate material.

A processor (e.g., processor 102) generating the constitutive model 110c may calculate the degradation of the transverse and shear moduli based on two damage functions $e_s(S_r)$ and $g_s(S_r)$ in terms of the reduced Schapery parameter:

$$S_r = \sqrt[3]{S} \qquad\qquad (1),$$

where $S$ is the energy dissipated due to micro-damage. Accordingly, the two damage functions may be included as part of pristine property equations given by:

$$E_{22} = E_{22}^0 \, e_s(S_r) \qquad\qquad (2),$$

$$G_{12} = G_{12}^0 \, g_s(S_r) \qquad\qquad (3),$$

where $E_{22}^0$ and $G_{12}^0$ are pristine properties that the processor may utilize when determining and solving a Schapery theory equation given by:

$$\frac{1}{2}\left(E_{22}^0 \frac{de_s(S_r)}{dS_r}\varepsilon_{22}^2 + \ G_{12}^0 \frac{dg_s(S_r)}{dS_r}\gamma_{12}^2\right) = -3S_r^2 \qquad\qquad (4)$$

Equation (4) is generally a thermodynamics model that ensures the rate of dissipated energy within the composite laminate material is always positive, and the processor may solve equation (4) to obtain the Schapery parameter in equation (1), and the damage function values $E_{22}$ and $G_{12}$ in equations (2) and (3), respectively. In certain aspects, the processor may hold other moduli constant when solving equation (4). In any event, the processor may then apply a two-parameter fit given by:

$$\tau_{12} = \frac{G_{12}^0}{C}(1 \text{-} e^{-C\gamma_{12}}) \qquad\qquad (5),$$

to generate portions of the pre-peak response 602 and/or the post-peak response 604.

The processor may generate the post-peak response 604 by utilizing a crack band model. For the post-peak response, the processor may define and/or may receive damage parameters to degrade the extensional and shear moduli, as well as Poisson's ratios. The crack band method employed by the processor utilizes a characteristic length to ensure the correct energy dissipation and mesh objectivity. The processor may calculate the characteristic lengths using the element nodal coordinates and material point coordinates. In certain aspects, based on failure models for composites, the element size may be used as the characteristic length.

The processor may also determine a post-peak softening response for the composite laminate material. More particularly, the processor may parameterize the softening curve for a composite laminate material by a normalized softening function, which can differ for fiber and matrix modes. The normalized softening function may generally be defined

by:

$$\sigma = \sigma^* \bar{f} \left(\frac{\varepsilon - |\varepsilon^*|}{\hat{\varepsilon} - |\varepsilon^*|}\right) \tag{6},$$

where

$$\bar{\varepsilon} = \frac{\varepsilon - |\varepsilon^*|}{\varepsilon^f}$$

is the normalized post-peak strain, $\sigma^*$ is the stress component at the failure initiation, $\hat{\varepsilon}$ is the absolute value of the ultimate failure strain, the post-peak failure strain $\varepsilon^f$ is given by:

$$\hat{\varepsilon} = |\varepsilon^*| + \varepsilon^f \tag{7},$$

and $\bar{f}$ is parameterized with a cubic Bezier curve. Using the parameterization of $\bar{f}$, the processor may generate a variety of shapes related to the softening of a particular composite laminate material. For example, the processor may generate a quasi-bilinear softening law, a linear law, a quasi-trapezoidal law, and/or other shapes or combinations thereof.

Using these equations (e.g., equations (1)-(7)) and others derived therefrom, the processor may fully describe the post-peak response 604 as:

$$d_1 = d_f = 1 - \frac{|\varepsilon_{11}^*|}{\varepsilon_{11}} \bar{f}_f \left(\frac{\varepsilon_{11} - |\varepsilon_{11}^*|}{\hat{\varepsilon}_{11} - |\varepsilon_{11}^*|}\right) \tag{8},$$

where the processor, when applying equation (8), may assume that the fiber damage is only governed by the strain in the fiber direction $\varepsilon_{11}$.

Additionally, a mixed-mode law may be utilized to describe matrix failure that guarantees a smooth and simultaneous vanishing of all stress components. This mixed-mode law may be governed by an effective strain, given by:

$$\epsilon_e = \sqrt{\epsilon_{22}^2 + \left(\frac{\hat{\epsilon}_{22}}{\hat{\gamma}_{12}} \gamma_{12}\right)^2 + \left(\frac{\hat{\epsilon}_{22}}{\hat{\gamma}_{23}} \gamma_{23}\right)^2} \tag{9},$$

and a minor correction may be added to the transverse behavior. In particular, the constitutive model 110c may include a distinction that when $\varepsilon_2 < 0$, $d_2$ is set to 0 in order to capture the contact between the crack surfaces and prevent inter-penetration.

Further, the constitutive model 110c may achieve mesh objectivity when the dissipated energy due to a crack opening is not influenced by the element characteristic length used for the crack band method. To achieve this, the constitutive model 110c may include a correction to the input value of the fracture energy. The actual dissipated fracture energy $G$ may be given by:

$$G = \left(\frac{Xl^e}{2G_{input}} \cdot e^{\frac{2G_{input}}{Xl^e}} - \frac{Xl^e}{2G_{input}} - 1\right) Xl^e \tag{10},$$

if logarithmic strain is used. Thus, to achieve a given fracture toughness $G = G_c$ with a tensile strength $X$ and characteristic length $l^e$, the solver module (e.g., solver module 124a) may determine the adjusted input value $G_{input}$ by solving equation 10. The solver module may utilize, for example, the Newton method upon entry into the post-peak domain.

The constitutive model 110c may also include a function for element deletion when a crack has fully developed (e.g., any damage variable is close to 1). This element deletion function may include other deletion criteria to prevent excessive element distortion, and may generally be given by:

$$\text{Delete element if} \begin{cases} \text{any } d_i > 0.9999 \\ \text{any } \epsilon_i < -1.0 \quad \text{or} \quad \epsilon_i > 1.5 \\ \text{any } |\gamma_{ij}| > 2.5 \\ \det \mathbf{F} < 0.3 \quad \text{or} \quad \det \mathbf{F} > 5.0 \end{cases} \tag{11},$$

The transition point 606 may represent transition criteria corresponding to the transition between the pre-peak response 602 to the post-peak response 604. For example, the processor may utilize Hashin criteria to govern the transition between the pre-peak response 602 and the post-peak response 604. However, it will be appreciated that any suitable transition criteria may be used. When modeling the transition criteria, the processor may analyze multiple failure planes for the composite laminate material. For example, FIGs. 5A-5C illustrate several example failure planes that the processor may analyze when determining the transition criteria for a particular composite laminate material.

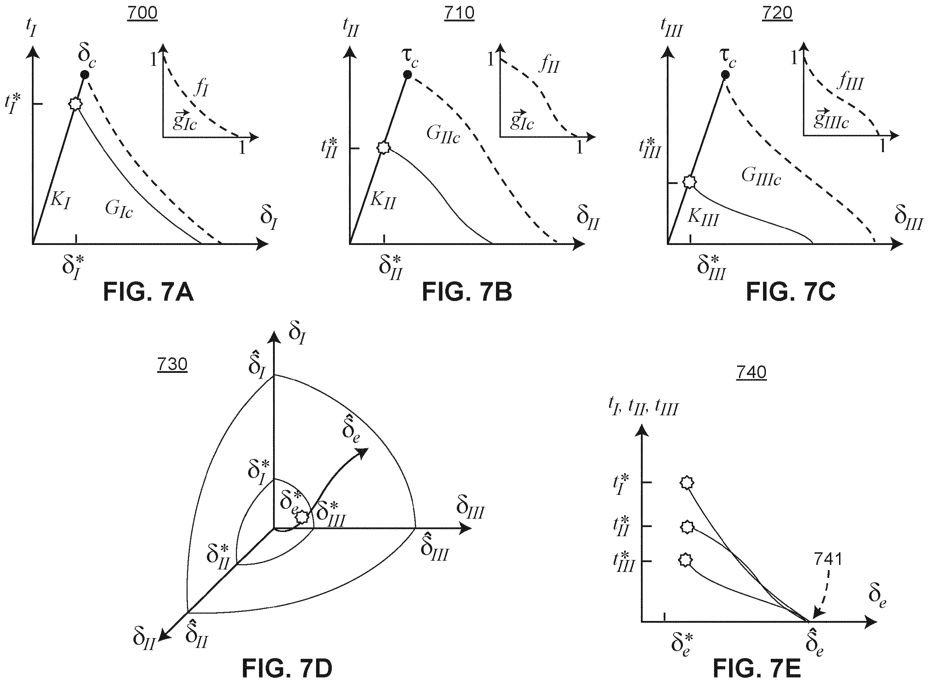

FIGs. 7A-7E illustrate an example mixed-mode traction-separation law for cohesive behavior of a composite laminate material, in accordance with various aspects disclosed herein. Generally, the delamination failure in a composite structure is most likely to happen under a mixed-mode condition. As a consequence, the inter-laminar constitutive model 124e may include a strict physical requirement that all tractions vanish simultaneously at the crack propagation, and when the crack is fully developed, the crack surface becomes traction-free. In order to accomplish these requirements, the inter-laminar constitutive model 124e may incorporate the definition of an effective separation, which allows the usage of arbitrary softening laws for each mode.

In particular, the principles of the mixed-mode formulation are depicted in FIGS. 7A-7E. In FIGs. 7A-7C, the graphs 700, 710, 720 illustrate the pure mode and mixed-mode responses of the interlayer. The pre-peak response across each of the graphs 700, 710, 720 is modeled as linear with a penalty stiffness $K_i$, where $i = I, II, III$ represents the distinct modes. For example, the graph 700 may represent an opening mode I, and graphs 710, 720 may represent shear modes II and III, respectively. The constitutive equation governing these graphs 700, 710, 720 may be given as:

$$\begin{bmatrix} t_I \\ t_{II} \\ t_{III} \end{bmatrix} = \begin{bmatrix} (1-d_I) & 0 & 0 \\ 0 & (1-d_{II}) & 0 \\ 0 & 0 & (1-d_{III}) \end{bmatrix} \begin{bmatrix} K_I & 0 & 0 \\ 0 & K_{II} & 0 \\ 0 & 0 & K_{III} \end{bmatrix} \begin{bmatrix} \delta_I \\ \delta_{II} \\ \delta_{III} \end{bmatrix} \tag{12},$$

where the pure mode strengths are $\sigma_c$ and $\tau_c$. The initiation criterion, influencing the values of the initiation stresses $t_I$, $t_{II}$ and $t_{III}$ may be given generally as:

$$\left(\frac{\max(0, t_I)}{\sigma_c}\right)^2 + \left(\frac{t_{II}}{\tau_c}\right)^2 + \left(\frac{t_{III}}{\tau_c}\right)^2 \geq 1 \tag{13}.$$

When the initiation criterion is met at the stresses $t_I$, $t_{II}$ and $t_{III}$, the inter-laminar constitutive model 124e may govern the cohesive response by the separation components and non-dimensionalized softening functions $f_i$. However, the model 124e may assume that compression does not affect the failure evolution.

The inter-laminar constitutive model 124e may utilize fundamental material properties as the pure-mode fracture toughness values for each mode $G_{ic}$, which is generally related to the area under the non-dimensionalized softening curve given by:

$$F_i \delta_i^f \bar{g}_{ic}^* = G_{ic} - \frac{F_i^2}{2K_i} \tag{14},$$

from which the quantities $\delta_i^f$ can be calculated by a solver module (e.g., solver module 124a). Moreover, the graph 730 of FIG. 7D may represent a separation space and failure loci, including failure separations corresponding to each of modes I, II, and III in graphs 700, 710, and 720. The solver module may determine final failure separations $\delta^{\wedge}_i$ for each mode by solving:

$$\hat{\delta}_i = |\delta_i^*| + \delta_i^f \tag{15}.$$

The inter-laminar constitutive model 124e may also include governing rules for the softening of each mode composed of the separation components, given by:

$$\delta_e = \sqrt{\max(0, \delta_I)^2 + \left(\frac{\hat{\delta}_I}{\hat{\delta}_{II}}\delta_{II}\right)^2 + \left(\frac{\hat{\delta}_I}{\hat{\delta}_{III}}\delta_{III}\right)^2} \tag{16},$$

where mode I may be chosen as the reference mode. The model 124e may also include a mixed-mode damage evolution expressed as:

$$d_i = 1 - \frac{\delta_e^*}{\delta_e}\bar{f}_i\left(\frac{\delta_e - \delta_e^*}{\hat{\delta}_e - \delta_e^*}\right), i = I, II, III \tag{17},$$

where $\delta_e^*$ is the effective separation value at the initiation point and $\delta^{\wedge}_e := \delta^{\wedge}_I$ is the final effective separation at complete failure. In this manner, the inter-laminar constitutive model 124e ensures the simultaneous vanishing of all tractions. For example, as illustrated in FIG. 7E, the graph 740 represents mixed-mode responses in the effective separation domain, and includes a separation value 741 at which all tractions for each of modes I, II, and III simultaneously vanish. Moreover, the loading/unloading behavior may be governed by the effective separation increment (e.g., the damage variables remain constant if $\delta_e$ decreases), and to prevent inter-penetration, the model 124e may impose a pristine penalty stiffness for mode I in the case of compression: $d_I = 0$ if $\delta_I < 0$.

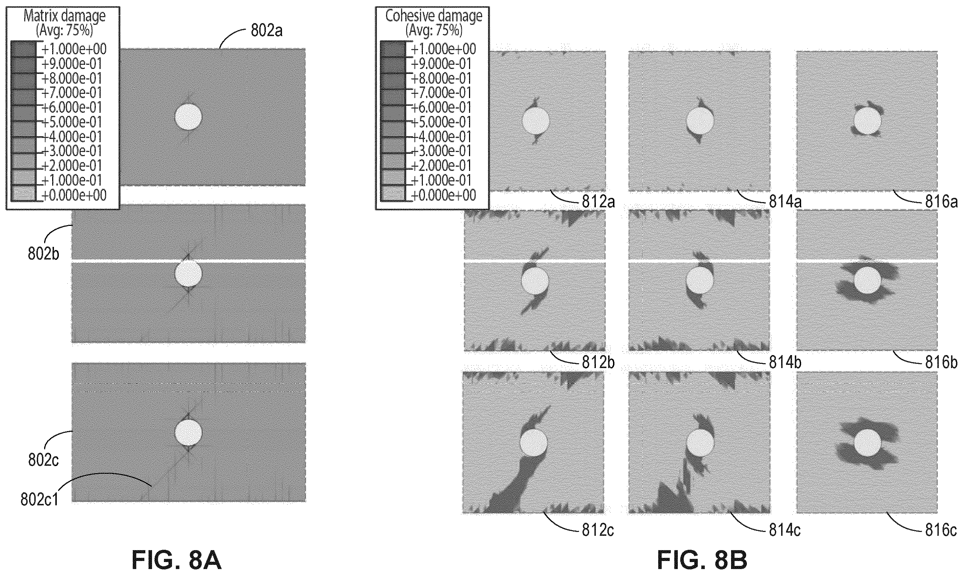

FIGs. 8A-8D depict example matrix crack patterns and delamination failure of the OHT laminate specimen 400 of FIG. 4A, in accordance with various aspects disclosed herein. As referenced herein, crack patterns, delamination failure, and/or any other type of mechanical response of the composite laminate material in response to applied stresses or strains (e.g., a loading state) may be a "mechanical response" of the material. Moreover, each of the figures referenced herein may be generated by the solver module 124a as part of the post-processing results 126a to illustrate, for example, how a mechanical response of the composite laminate material in response to input strain values may be determined.

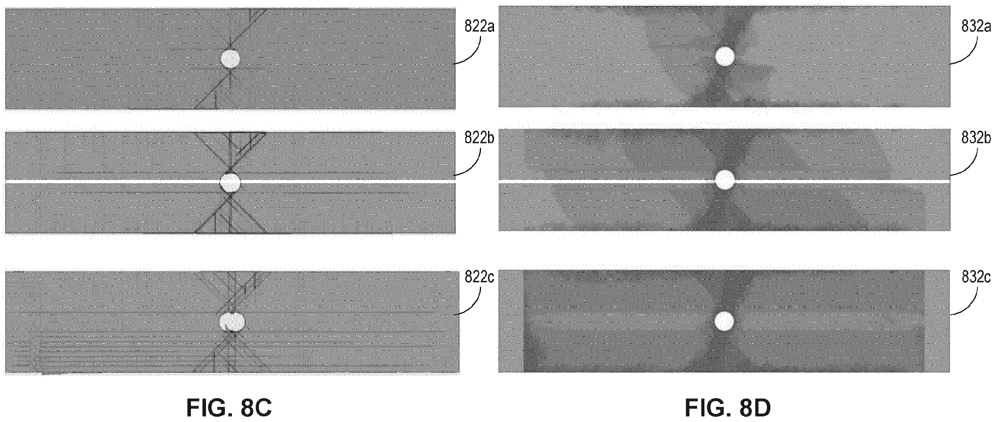

Generally, each of FIGs. 8A-8D illustrate the development of damage patterns within a composite laminate material (e.g., OHT laminate specimen 400) during various loading states of the material. FIG. 8A generally illustrates the matrix damage experienced by all plies of the material near the cut-out at three loading states, while FIG. 8B illustrates cohesive damage the material experienced at the same position and at the same loading states. FIG. 8C illustrates the matrix damage experienced throughout the entire specimen during three successive loading states beyond those illustrated in FIG. 8A and 8B, and FIG. 8D illustrates cohesive damage experienced throughout the entire specimen during the same three successive loading states.

In reference to FIG. 8A, the first matrix damage image 802a may represent a general level of matrix damage experienced by the composite laminate material at a first loading state. More specifically, the first matrix damage image 802a may represent a pre-peak damage pattern, wherein major split cracks in all plies near the hole are readily visible. The first matrix damage image 802a may represent a pre-peak damage pattern for the specimen because, despite forming matrix cracks (e.g., wherein the matrix-split elements are in post-peak stress-strain, as described in reference to FIG. 6), the general load displacement of the specimen is such that the overall structural response of the specimen remains a pre-peak damage response. Thus, it should be understood that the pre-peak and post-peak responses for individual specimen elements (e.g., matrix-split strips modeled by FIG. 6) and the pre-peak and post-peak responses for the entire specimen may be modeled at different scales.

Correspondingly, in reference to the 45/90 first image 812a, the 90/-45 first image 814a, and the -45/0 first image 816a in FIG. 8B, cohesive damage (e.g., delamination) has developed between the matrix cracks, forming triangular shapes. However, in certain instances, the composite laminate modeling application 110 may initiate some matrix crack and splitting near the central hole and/or the free edges of the material prior to reaching the first loading state.

These cracks, experienced as both matrix cracking and cohesive damage, may continue to grow until the solver module 124a reaches the second loading state. For example, as illustrated in the second matrix damage image 802b, the cracks continue to grow and a number of significant matrix cracks occur at the free edges of the material. Additionally, as illustrated in the 45/90 second image 812b, the 90/-45 second image 814b, and the -45/0 second image 816b, the delamination may continue to spread with the splitting due to a strong interaction at each interface in a stable manner. Moreover, in certain aspects, some significant interface damage may also occur at the free edges in every interlayer except for the -45 /0 interface (e.g., as illustrated in the -45/0 second image 816b).

The solver module 124a may continue until reaching the third loading state, where an abrupt growth of a major split crack is identified. As illustrated in the third matrix damage image 802c, the matrix damage experienced between the second and third loading state may include a substantial growth of a matrix crack 802c1 that extends along one side of the composite laminate material from the central hole to the free edge. The major split crack 802c1 may be localized to one side of the composite material, and it may induce more cracking in its vicinity as well as delamination spreading at the 45/90 and 90/-45 interfaces, extending from the central hole to the free edge. For example, as illustrated in the 45/90 third image 812c and the 90/-45 third image 814c, the abrupt growth of the major split crack 802c1 causes delamination spreading from the central hole to the free edge. However, as illustrated in the -45/0 third image 816c, the cohesive damage experienced at the -45/0 interface may not have advanced significantly between the second and third loading state.

At this point, the composite laminate material may begin experiencing excessive delamination migration and spreading that may cause a load drop of the specimen. The solve module 124a may continue to a fourth loading state, wherein all major matrix cracks begin to rapidly extend to the material free edges. For example, in reference to the first specimen matrix damage image 822a of FIG. 8C, the 0 split cracks may grow in an asymmetric manner. Due to a ply-to-ply interaction, the solver module 124a may determine that subcritical matrix damage is triggered along the major split cracks, and that delamination may grow rapidly along with the intra-ply failure. Namely, in reference to first specimen cohesive damage image 832a of FIG. 8D, the delamination includes footprints from several different interlayers of the material. This delamination migration, similar to the matrix split cracks, may not develop symmetrically, such that symmetric interfaces (e.g., the two -45/0 interfaces) may leave asymmetric or otherwise different delamination migration footprints during the loading process generated by the solver module 124a.

The solver module 124a may then apply a fifth loading state to the composite laminate material. As shown in the second specimen matrix damage image 822b, the 0 splitting on both sides of the central hole has almost reached the external grip sections of the specimen. Further, in reference to the second specimen cohesive damage image 832b, the delamination migration continues to expand throughout the interlayers and more through the entire width of the specimen. As a result of the loading during the fifth loading state, the solver module 124a may determine that, due to the loss of structural integrity by both splitting and delamination, the overall structural stiffness of the specimen was reduced. This loss of stiffness may be noted and output as part of the results 124f and/or as part of the post-processing results 126a.

Thereafter, the solver module 124a may increase the load to a sixth loading state. As illustrated in the third specimen matrix damage image 822c and the third specimen cohesive damage image 832c, the split cracks and delamination may continue to grow until the 0 split cracks fully extend to the grips of the specimen. At this point, the solver module 124a may register/identify, for example, fiber rupture triggering near the grips of the specimen. This fiber rupture may additionally induce splitting near its vicinity, and the 0 layer may eventually fail at every grip connection except for the middle strips that did not carry any load.

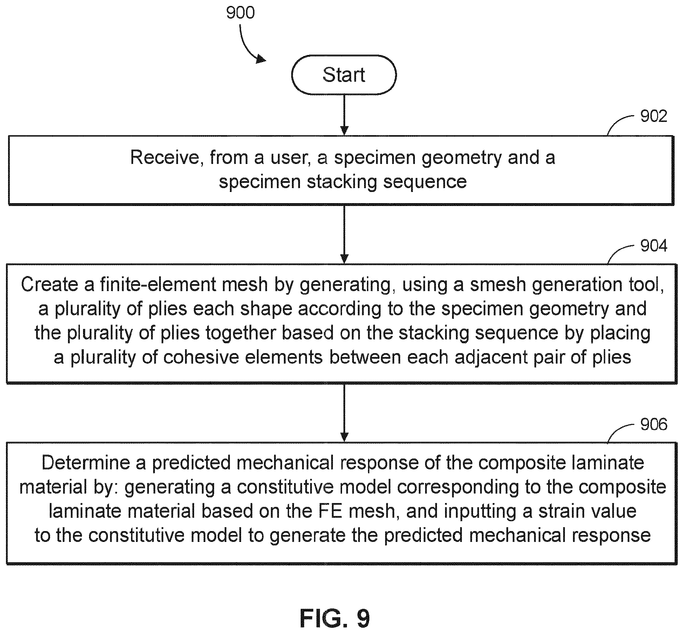

FIG. 9 illustrates an example method 900 for semi-discrete modeling of delamination migration in composite laminate materials, in accordance various aspects disclosed herein. For ease of discussion, many of the various actions included in the method 900 may be optional, and may be described herein as performed by or with the use of a modeling application (e.g., composite laminate modeling application 110). However, it is to be appreciated that the various actions included in the method 900 may be performed by, for example, a local processor (e.g., processor 102) executing the modeling application, an external server, and/or other suitable processors or combinations thereof.

The example method 900 includes receiving, from a user, a specimen geometry and a specimen stacking sequence (block 902). The example method 900 may also include creating, by one or more processors, a finite-element (FE) mesh (block 904). For example, a mesh generation tool (e.g., mesh generation tool 110d) may generate a plurality of plies each shaped according to the specimen geometry, wherein each ply includes (i) a plurality of fibrous strips along a fiber direction and (ii) a bulk element between each of the plurality of fibrous strips. The mesh generation tool may also connect the plurality of plies together based on the stacking sequence by placing a plurality of cohesive elements between each adjacent pair of plies. This FE mesh may generally define a composite laminate material.

In certain aspects, connecting the plurality of plies further includes connecting, using the mesh generation tool, the plurality of plies together based on the stacking sequence by placing the plurality of cohesive elements between each adjacent pair of plies based on a set of tie constraints. Further, the set of tie constraints may include enforcing that nodes of the plurality of cohesive elements are located on boundaries of predicted intra-ply matrix cracks. For example, the cohesive elements may be located near matrix-split strips embedded within the neighboring plies, such that any matrix cracking will happen first at the matrix-split strips, and the cohesive elements may be near such matrix cracking.

In some aspects, connecting the plurality of plies further includes partitioning an interlayer between each adjacent pair of plies by defining a plurality of interlayer partition features that surround each fibrous strip included in each respective adjacent pair of plies. Further, the plurality of interlayer partition features may surround each fibrous strip included in each respective adjacent pair of plies by satisfying or exceeding a width tolerance to shift the interlayer partition features toward bulk elements included in each respective adjacent pair of plies. Generally, though, the width tolerance may be optional in order to increase the robustness of the tie connections. Additionally, or alternatively, the mesh generation tool and/or any other suitable processor may place a cohesive element at least at an intersection of each respective pair of interlayer partition features.

The example method 900 may also include determining, by the one or more processors, a predicted mechanical response of the composite laminate material (block 906). The processors (e.g., utilizing/executing the solver module 124a) may generate a constitutive model (e.g., constitutive model 110c, inter-laminar constitutive model 124e) corresponding to the composite laminate material based on the FE mesh, and may input a stress value and/or strain value to the constitutive model to generate the predicted mechanical response. In certain aspects, the constitutive model may include mixed-mode conditions to model delamination failure in the composite laminate material.

More specifically, the solver (e.g., solver module 124a) may provide strain values for each integration point of every element at every iteration to the constitutive model. The Laminae subroutine 124c (e.g., by the constitutive model 110c) and/or the inter-laminar subroutine 124d (e.g., by the inter-laminar constitutive model 124e) may receive the strain values and return the strain values and corresponding calculated stress values to the solver, which may output the predicted mechanical response (e.g., results 124f).

In certain aspects, a thermal analysis may be performed before determining the predicted mechanical response in order to capture the manufacturing effects. However, it should be appreciated that the method 900 may be applied for any loading types (e.g., thermal or mechanical), where damage, cracking, and failure may occur.

ADDITIONAL CONSIDERATIONS

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Additionally, certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connects the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of the example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but also deployed across a number of machines. In some example embodiments, the processor or processors may be located in a single location (e.g., within a home environment, an office environment or as a server farm), while in other embodiments the processors may be distributed across a number of locations.

The performance of certain of the operations may be distributed among the one or more processors, not only residing within a single machine, but also deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the description. This description, and the claims that follow, should be read to include one or at least one and the singular also includes the plural unless it is obvious that it is meant otherwise.

While the present invention has been described with reference to specific examples, which are intended to be illustrative only and not to be limiting of the invention, it will be apparent to those of ordinary skill in the art that changes, additions and/or deletions may be made to the disclosed embodiments without departing from the invention as defined by the appended claims.

**Claims**

1.   A method for manufacturing and/or repairing a part comprising a composite laminate material, the method involving a computer implemented method for semi-discrete modeling of delamination migration in composite laminate materials, the method comprising:

receiving (902), from a user, a specimen geometry and a specimen stacking sequence;
creating (904), by one or more processors (102), a finite-element (FE) mesh by:

generating, using a mesh generation tool (110d), a plurality of plies each shaped according to the specimen geometry, wherein each ply includes (i) a plurality of fibrous strips (202a; 210a, 210b, 210c) along a fiber direction and (ii) a bulk element (200a; 202b; 204b; 212a, 212b) between each of the plurality of fibrous strips (202a; 210a, 210b, 210c), and
connecting, using the mesh generation tool (110d), the plurality of plies together based on the stacking sequence by:

placing a plurality of cohesive elements (204a) between each adjacent pair of plies, and
partitioning (300) an interlayer between each adjacent pair of plies by defining a plurality of interlayer partition features proximate to less than all fibrous strips included in each adjacent pair of plies,

wherein the FE mesh defines a composite laminate material;

determining (906), by the one or more processors (102), a predicted mechanical response of the composite laminate material by:

generating a constitutive model (110c) corresponding to the composite laminate material based on the FE mesh, and
inputting a strain value to the constitutive model (110c) to generate the predicted mechanical response;

determining optimal material characteristics for a particular use-case using the constitutive model (110c); and running manufacturing equipment to manufacture the part, wherein at least one fibrous strip is applied in the composite laminate material in response to the predicted mechanical response to manufacture the composite laminate material with those material characteristics to produce an optimally configured composite laminate material for the particular use-case.

2. The method of claim 1, wherein connecting the plurality of plies further comprises:
connecting, using the mesh generation tool (110d), the plurality of plies together based on the stacking sequence by placing the plurality of cohesive elements (204a) between each adjacent pair of plies based on a set of tie constraints.

3. The method of claim 2, wherein the set of tie constraints includes enforcing that nodes of the plurality of cohesive elements are located on boundaries of predicted intra-ply matrix cracks.

4. The method of any of claims 1 to 3, wherein partitioning (300) the interlayer between each adjacent pair of plies comprises defining a plurality of interlayer partition features that surround each fibrous strip (202a; 210a, 210b, 210c) included in each respective adjacent pair of plies.

5. The method of claim 4, wherein the plurality of interlayer partition features surround each fibrous strip (202a; 210a, 210b, 210c) included in each respective adjacent pair of plies by satisfying or exceeding a width tolerance to shift the interlayer partition features toward bulk elements (200a; 202b; 204b; 212a, 212b) included in each respective adjacent pair of plies.

6. The method of any of claims 4 or 5, further comprising:
placing a cohesive element (204a) at least at an intersection of each respective pair of interlayer partition features.

7. The method of any of claims 1 to 6, wherein the constitutive model (110c) includes mixed-mode conditions to model delamination failure in the composite laminate material.

8. A system for manufacturing and/or repairing a part comprising a composite laminate material, the system comprising a subsystem for semi-discrete modeling of delamination migration in composite laminate materials, the system comprising:

a user interface (104);

a memory (110) storing a set of computer-readable instructions comprising at least a mesh generation tool (110d); and

a processor (102) interfacing with the user interface (104) and the memory (110), and configured to execute the set of computer-readable instructions to cause the processor (102) to:

receive (902), from a user, a specimen geometry and a specimen stacking sequence;
create (904) a finite-element (FE) mesh by:

generating, using a mesh generation tool (110d), a plurality of plies each shaped according to the specimen geometry, wherein each ply includes (i) a plurality of fibrous strips (202a; 210a, 210b, 210c) along a fiber direction and (ii) a bulk element (200a; 202b; 204b; 212a, 212b) between each of the plurality of fibrous strips (202a; 210a, 210b, 210c), and
connecting, using the mesh generation tool (110d), the plurality of plies together based on the stacking sequence by:

placing a plurality of cohesive elements (204a) between each adjacent pair of plies, and
partitioning (300) an interlayer between each adjacent pair of plies by defining a plurality of interlayer partition features proximate to less than all fibrous strips included in each adjacent pair of plies,

wherein the FE mesh defines a composite laminate material;

determine (906) a predicted mechanical response of the composite laminate material by:

generating a constitutive model (110c) corresponding to the composite laminate material based on the FE mesh, and
inputting a strain value to the constitutive model (110c) to generate the predicted mechanical response;

determine optimal material characteristics for a particular use-case using the constitutive model (110c); and

manufacturing equipment configured to manufacture the part, wherein at least one fibrous strip is applied in the composite laminate material in response to the predicted mechanical response to manufacture the composite laminate material with those material characteristics to produce an optimally configured composite laminate material for the particular use-case.

9.  The system of claim 8, wherein the set of computer-readable instructions further cause the processor (102) to connect the plurality of plies by:

connecting, using the mesh generation tool (110d), the plurality of plies together based on the stacking sequence by placing the plurality of cohesive elements 8204a) between each adjacent pair of plies based on a set of tie constraints,
wherein the set of tie constraints includes enforcing that nodes of the plurality of cohesive elements (204a) are located on boundaries of predicted intra-ply matrix cracks.

10. The system of claim 8 or 9, wherein the set of computer-readable instructions further cause the processor (102) to connect the plurality of plies by:

partitioning (300) the interlayer between each adjacent pair of plies by defining a plurality of interlayer partition features that surround each fibrous strip (202a; 210a, 210b, 210c) included in each respective adjacent pair of plies, and
placing a cohesive element (204a) at least at an intersection of each respective pair of interlayer partition features.

11. The system of claim 10, wherein the plurality of interlayer partition features surround each fibrous strip (202a; 210a, 210b, 210c) included in each respective adjacent pair of plies by satisfying or exceeding a width tolerance to shift the interlayer partition features toward bulk elements included in each respective adjacent pair of plies.

12. The system of any of claims 8 to 11, wherein the constitutive model (110c) includes mixed-mode conditions to model delamination failure in the composite laminate material.

**13.** A non-transitory computer-readable storage medium having stored thereon a set of instructions, executable by at least one processor (102), for semi-discrete modeling of delamination migration in composite laminate materials, the instructions comprising:

instructions for receiving (902), from a user, a specimen geometry and a specimen stacking sequence; instructions for creating (904) a finite-element (FE) mesh by:

generating, using a mesh generation tool (110d), a plurality of plies each shaped according to the specimen geometry, wherein each ply includes (i) a plurality of fibrous strips (202a; 210a, 210b, 210c) along a fiber direction and (ii) a bulk element (200a; 202b; 204b; 212a, 212b) between each of the plurality of fibrous strips (202a; 210a, 210b, 210c), and connecting, using the mesh generation tool (110d), the plurality of plies together based on the stacking sequence by:

placing a plurality of cohesive elements (204a) between each adjacent pair of plies, and partitioning (300) an interlayer between each adjacent pair of plies by defining a plurality of interlayer partition features proximate to less than all fibrous strips included in each adjacent pair of plies,

wherein the FE mesh defines a composite laminate material;

instructions for determining (906) a predicted mechanical response of the composite laminate material by:

generating a constitutive model (110c) corresponding to the composite laminate material based on the FE mesh, and inputting a strain value to the constitutive model (110c) to generate the predicted mechanical response; and

instructions for determining optimal material characteristics for a particular use-case using the constitutive model (110c) and for causing manufacturing equipment to manufacture a part comprising a respective composite laminate material, wherein at least one fibrous strip in the respective composite laminate material is based on the predicted mechanical response to manufacture the composite laminate material with those material characteristics to produce an optimally configured composite laminate material for the particular use-case.

**14.** The non-transitory computer-readable storage medium of claim 13, wherein the set of instructions further comprise:

instructions for connecting, using the mesh generation tool (110d), the plurality of plies together based on the stacking sequence by placing the plurality of cohesive elements (204a) between each adjacent pair of plies based on a set of tie constraints, wherein the set of tie constraints includes enforcing that nodes of the plurality of cohesive elements (204a) are located on boundaries of predicted intra-ply matrix cracks.

**15.** The non-transitory computer-readable storage medium of claim 13 or 14, wherein the set of instructions further comprise:

instructions for partitioning (300) the interlayer between each adjacent pair of plies by defining a plurality of interlayer partition features that surround each fibrous strip (202a; 210a, 210b, 210c) included in each respective adjacent pair of plies; and instructions for placing a cohesive element at least at an intersection of each respective pair of interlayer partition features, wherein the plurality of interlayer partition features surround each fibrous strip (202a; 210a, 210b, 210c) included in each respective adjacent pair of plies by satisfying or exceeding a width tolerance to shift the interlayer partition features toward bulk elements (200a; 202b; 204b; 212a, 212b) included in each respective adjacent pair of plies.

**Patentansprüche**

**1.** Verfahren zur Herstellung und/oder Reparatur eines Teils, das ein Verbundlaminatmaterial umfasst, wobei das Verfahren ein computerimplementiertes Verfahren zur semidiskreten Modellierung einer Delaminierungsmigration in Verbundlaminatmaterialien umfasst, wobei das Verfahren umfasst:

Empfangen (902) einer Mustergeometrie und einer Musterstapelungssequenz von einem Benutzer;

Erstellen (904), durch einen oder mehrere Prozessoren (102), eines Finite-Elemente-Netzes (FE-Netzes) durch:

Erzeugen einer Vielzahl von Lagen, die jeweils entsprechend der Mustergeometrie geformt sind, unter Verwendung eines Netzgenerierungswerkzeugs (110d), wobei jede Lage (i) eine Vielzahl von Faserstreifen (202a; 210a, 210b, 210c) entlang einer Faserrichtung und (ii) ein Volumenelement (200a; 202b; 204b; 212a, 212b) zwischen den jeweiligen der Vielzahl von Faserstreifen (202a; 210a, 210b, 210c) umfasst, und

Verbinden der Vielzahl von Lagen untereinander unter Verwendung des Netzgenerierungswerkzeugs (110d) auf Basis der Stapelungssequenz durch:

Anordnen einer Vielzahl von Kohäsionselementen (204a) zwischen jedem benachbarten Paar von Lagen und

Aufteilen (300) einer Zwischenschicht zwischen jedem benachbarten Paar von Lagen durch Definieren einer Vielzahl von Zwischenschicht-Aufteilungsmerkmalen in der Nähe von weniger als allen Faserstreifen, die in jedem benachbarten Paar von Lagen enthalten sind,

wobei das FE-Netz ein Verbundlaminatmaterial definiert;

Bestimmen (906), durch den einen oder die Vielzahl von Prozessoren (102), einer vorhergesagten mechanischen Reaktion des Verbundlaminatmaterials durch:

Erzeugen eines konstitutiven Modells (110c), das dem Verbundlaminatmaterial entspricht, basierend auf dem FE-Netz, und

Eingeben eines Dehnungswerts in das konstitutive Modell (110c), um die vorhergesagte mechanische Reaktion zu erzeugen;

Bestimmen von optimalen Materialeigenschaften für einen bestimmten Anwendungsfall unter Verwendung des konstitutiven Modells (110c); und

Betreiben einer Fertigungsanlage zur Herstellung des Teils, wobei mindestens ein Faserstreifen in Abhängigkeit von der vorhergesagten mechanischen Reaktion in das Verbundlaminatmaterial eingebracht wird, um das Verbundlaminatmaterial mit diesen Materialeigenschaften herzustellen und ein optimal konfiguriertes Verbundlaminatmaterial für den bestimmten Anwendungsfall zu erzeugen.

2. Verfahren nach Anspruch 1, wobei das Verbinden der Vielzahl von Lagen ferner umfasst:
Verbinden der Vielzahl von Lagen unter Verwendung des Netzgenerierungswerkzeugs (110d) auf der Basis der Stapelungssequenz, indem die Vielzahl von Kohäsionselementen (204a) zwischen jedem benachbarten Paar von Lagen auf der Basis eines Satzes von Verbindungsbeschränkungen angeordnet werden.

3. Verfahren nach Anspruch 2, wobei der Satz von Verbindungsbeschränkungen die Zwangsbedingung umfasst, dass Knoten der Vielzahl von Kohäsionselementen an Grenzen von vorhergesagten Matrixrissen innerhalb der Lagen angeordnet sind.

4. Verfahren nach einem der Ansprüche 1 bis 3, wobei das Aufteilen (300) der Zwischenschicht zwischen jedem benachbarten Paar von Lagen das Definieren einer Vielzahl von Zwischenschicht-Aufteilungsmerkmalen umfasst, die jeden Faserstreifen (202a; 210a, 210b, 210c) umgeben, der in jedem jeweiligen benachbarten Paar von Lagen enthalten ist.

5. Verfahren nach Anspruch 4, wobei die Vielzahl von Zwischenschicht-Aufteilungsmerkmalen jeden Faserstreifen (202a; 210a, 210b, 210c) umgeben, der in jedem jeweiligen benachbarten Paar von Lagen enthalten ist, indem sie eine Breitentoleranz erfüllen oder überschreiten, um die Zwischenschicht-Aufteilungsmerkmale in Richtung der Volumenelemente (200a; 202b; 204b; 212a, 212b) zu verschieben, die in jedem jeweiligen benachbarten Paar von Lagen enthalten sind.

6. Verfahren nach einem der Ansprüche 4 oder 5, das ferner umfasst:
Anordnen eines Kohäsionselements (204a) zumindest an einer Schnittstelle jedes jeweiligen Paares von Zwischenschicht-Aufteilungsmerkmalen.

7. Verfahren nach einem der Ansprüche 1 bis 6, wobei das konstitutive Modell (110c) Mischmodus Bedingungen umfasst, um ein Delaminierungsversagen in dem Verbundlaminatmaterial zu modellieren.

8. System zur Herstellung und/oder Reparatur eines Teils, das ein Verbundlaminatmaterial umfasst, wobei das System ein Subsystem zur semidiskreten Modellierung einer Delaminierungsmigration in Verbundlaminatmaterialien umfasst, wobei das System umfasst:

eine Benutzerschnittstelle (104);
einen Speicher (110), der einen Satz computerlesbarer Anweisungen speichert, die mindestens ein Netzgenerierungswerkzeug (110d) umfassen; und
einen Prozessor (102), der mit der Benutzerschnittstelle (104) und dem Speicher (110) verbunden ist und dazu eingerictet ist, dass er den Satz computerlesbarer Befehle ausführt, um den Prozessor (102) zu folgenden Schritten zu veranlassen:

Empfangen (902) einer Mustergeometrie und einer Musterstapelungssequenz von einem Benutzer;
Erstellen (904) eines Finite-Elemente-Netzes (FE-Netz) durch:

Erzeugen einer Vielzahl von Lagen, die jeweils entsprechend der Mustergeometrie geformt sind, unter Verwendung eines Netzgenerierungswerkzeugs (110d), wobei jede Lage (i) eine Vielzahl von Faserstreifen (202a; 210a, 210b, 210c) entlang einer Faserrichtung und (ii) ein Volumenelement (200a; 202b; 204b; 212a, 212b) zwischen den jeweiligen der Vielzahl von Faserstreifen (202a; 210a, 210b, 210c) umfasst, und
Verbinden der Vielzahl von Lagen untereinander unter Verwendung des Netzgenerierungswerkzeugs (110d) auf Basis der Stapelungssequenz durch:

Platzieren einer Vielzahl von Kohäsionselementen (204a) zwischen jedem benachbarten Paar von Lagen und
Aufteilen (300) einer Zwischenschicht zwischen jedem benachbarten Paar von Lagen durch Definieren einer Vielzahl von Zwischenschicht-Aufteilungsmerkmalen in der Nähe von weniger als allen Faserstreifen, die in jedem benachbarten Paar von Lagen enthalten sind,

wobei das FE-Netz ein Verbundlaminatmaterial definiert;

Bestimmen (906) einer vorhergesagten mechanischen Reaktion des Verbundlaminatmaterials durch:

Erzeugen eines konstitutiven Modells (110c), das dem Verbundlaminatmaterial entspricht, basierend auf dem FE-Netz, und
Eingabe eines Dehnungswerts in das konstitutive Modell (110c), um die vorhergesagte mechanische Reaktion zu erzeugen;

Bestimmen von optimalen Materialeigenschaften für einen bestimmten Anwendungsfall unter Verwendung des konstitutiven Modells (110c); und

eine Fertigungsanlage, die zur Herstellung des Teils eingerichtet ist, wobei mindestens ein Faserstreifen in Abhängigkeit von der vorhergesagten mechanischen Reaktion in das Verbundlaminatmaterial eingebracht wird, um das Verbundlaminatmaterial mit diesen Materialeigenschaften herzustellen und ein optimal konfiguriertes Verbundlaminatmaterial für den bestimmten Anwendungsfall zu erzeugen.

9. System nach Anspruch 8, wobei der Satz computerlesbarer Anweisungen den Prozessor (102) ferner veranlasst, die Vielzahl von Lagen zu verbinden, durch

Verbinden der Vielzahl von Lagen unter Verwendung des Netzgenerierungswerkzeugs (110d) auf der Basis der Stapelungssequenz, indem die Vielzahl von Kohäsionselementen (204a) zwischen jedem benachbarten Paar von Lagen auf der Basis eines Satzes von Verbindungsbeschränkungen angeordnet werden,
wobei der Satz von Verbindungsbeschränkungen die Zwangsbedingung umfasst, dass Knoten der Vielzahl von Kohäsionselementen (204a) an Grenzen von vorhergesagten Matrixrissen innerhalb der Lagen angeordnet sind.

10. System nach Anspruch 8 oder 9, wobei der Satz computerlesbarer Anweisungen den Prozessor (102) ferner veranlasst, die Vielzahl von Lagen zu verbinden, durch

Aufteilen (300) der Zwischenschicht zwischen jedem benachbarten Paar von Lagen durch Definieren einer Vielzahl von Zwischenschicht-Aufteilungsmerkmalen, die jeden Faserstreifen (202a; 210a, 210b, 210c) umgeben, der in jedem jeweiligen benachbarten Paar von Lagen enthalten ist

Anordnen eines Kohäsionselements (204a) zumindest an einer Schnittstelle jedes jeweiligen Paares von Zwischenschicht-Aufteilungsmerkmalen.

11. System nach Anspruch 10, wobei die Vielzahl von Zwischenschicht-Aufteilungsmerkmalen jeden Faserstreifen (202a; 210a, 210b, 210c) umgeben, der in jedem jeweiligen benachbarten Paar von Lagen enthalten ist, indem sie eine Breitentoleranz erfüllen oder überschreiten, um die Zwischenschicht-Aufteilungsmerkmale in Richtung der in jedem jeweiligen benachbarten Paar von Lagen enthaltenen Volumenelemente zu verschieben.

12. System nach einem der Ansprüche 8 bis 11, wobei das konstitutive Modell (110c) gemischte Mischmodus Bedingungen umfasst, um ein Delaminierungsversagen in dem Verbundlaminatmaterial zu modellieren.

13. Nichtflüchtiges computerlesbares Speichermedium, auf dem ein Satz von Anweisungen gespeichert ist, die von mindestens einem Prozessor (102) ausgeführt werden können, um eine Delaminierungsmigration in Verbundlaminatmaterialien semidiskret zu modellieren, wobei die Anweisungen Folgendes umfassen:

Anweisungen zum Empfangen (902) einer Mustergeometrie und einer Musterstapelungssequenz von einem Benutzer;

Anweisungen zum Erstellen (904) eines Finite-Elemente-Netzes (FE-Netz) durch:

Erzeugen einer Vielzahl von Lagen, die jeweils entsprechend der Mustergeometrie geformt sind, unter Verwendung eines Netzgenerierungswerkzeugs (110d), wobei jede Lage (i) eine Vielzahl von Faserstreifen (202a; 210a, 210b, 210c) entlang einer Faserrichtung und (ii) ein Volumenelement (200a; 202b; 204b; 212a, 212b) zwischen jedem der Vielzahl von Faserstreifen (202a; 210a, 210b, 210c) umfasst, und

Verbinden der Vielzahl von Lagen unter Verwendung des Netzgenerierungswerkzeugs (110d) auf der Basis der Stapelungssequenz durch:

Anordnen einer Vielzahl von Kohäsionselementen (204a) zwischen jedem benachbarten Paar von Lagen und

Aufteilen (300) einer Zwischenschicht zwischen jedem benachbarten Paar von Lagen durch Definieren einer Vielzahl von Zwischenschicht-Aufteilungsmerkmalen in der Nähe von weniger als allen Faserstreifen, die in jedem benachbarten Paar von Lagen enthalten sind,

wobei das FE-Netz ein Verbundlaminatmaterial definiert;

Anweisungen zum Bestimmen (906) einer vorhergesagten mechanischen Reaktion des Verbundlaminatmaterials durch:

Erzeugen eines konstitutiven Modells (110c), das dem Verbundlaminatmaterial entspricht, basierend auf dem FE-Netz, und

Eingeben eines Dehnungswerts in das konstitutive Modell (110c), um die vorhergesagte mechanische Reaktion zu erzeugen; und

Anweisungen zum Bestimmen optimaler Materialeigenschaften für einen bestimmten Anwendungsfall unter Verwendung des konstitutiven Modells (110c) und zum Veranlassen einer Fertigungsanlage, ein Teil herzustellen, das ein entsprechendes Verbundlaminatmaterial umfasst, wobei mindestens ein Faserstreifen in dem entsprechenden Verbundlaminatmaterial auf der vorhergesagten mechanischen Reaktion basiert, um das Verbundlaminatmaterial mit diesen Materialeigenschaften herzustellen, um ein optimal konfiguriertes Verbundlaminatmaterial für den bestimmten Anwendungsfall zu erzeugen.

14. Nichtflüchtiges computerlesbares Speichermedium nach Anspruch 13, wobei der Satz von Anweisungen ferner umfasst:

Anweisungen zum Verbinden der Vielzahl von Lagen unter Verwendung des Netzgenerierungswerkzeugs (110d) auf der Basis der Stapelungssequenz, indem die Vielzahl von Kohäsionselementen (204a) zwischen jedem benachbarten Paar von Lagen auf der Basis eines Satzes von Verbindungsbeschränkungen angeordnet werden,

wobei der Satz von Verbindungsbeschränkungen die Zwangsbedingungen umfasst, dass Knoten der Vielzahl von Kohäsionselementen (204a) an Grenzen von vorhergesagten Matrixrissen innerhalb der Lagen angeordnet sind.

**15.** Nichtflüchtiges computerlesbares Speichermedium nach Anspruch 13 oder 14, wobei der Satz von Anweisungen ferner umfasst:

Anweisungen zum Aufteilen (300) der Zwischenschicht zwischen jedem benachbarten Paar von Lagen durch Definieren einer Vielzahl von Zwischenschicht-Aufteilungsmerkmalen, die jeden Faserstreifen (202a; 210a, 210b, 210c) umgeben, der in jedem jeweiligen benachbarten Paar von Lagen enthalten ist; und
Anweisungen zum Anordnen eines Kohäsionselements zumindest an einer Schnittstelle jedes jeweiligen Paares von Zwischenschicht-Aufteilungsmerkmalen,
wobei die Vielzahl von Zwischenschicht-Aufteilungsmerkmalen jeden Faserstreifen (202a; 210a, 210b, 210c) umgeben, der in jedem jeweiligen benachbarten Paar von Lagen enthalten ist, indem sie eine Breitentoleranz erfüllen oder überschreiten, um die Zwischenschicht-Aufteilungsmerkmale in Richtung der Volumenelemente (200a; 202b; 204b; 212a, 212b) zu verschieben, die in jedem jeweiligen benachbarten Paar von Lagen enthalten sind.

**Revendications**

**1.** Procédé de fabrication et/ou de réparation d'une pièce comprenant un matériau stratifié composite, le procédé impliquant un procédé mis en œuvre par ordinateur pour une modélisation semi-discrète de migration de délaminage de matériaux stratifiés composites, le procédé comprenant :

la réception (902), en provenance d'un utilisateur, d'une géométrie d'échantillon et d'une séquence d'empilage d'échantillons ;
la création (904), par un ou plusieurs processeurs (102), d'un maillage d'éléments finis (FE) par :

génération, à l'aide d'un outil de génération de maillage (110d), d'une pluralité de plis formés chacun selon la géométrie d'échantillon, dans lequel chaque pli comporte (i) une pluralité de bandes fibreuses (202a ; 210a, 210b, 210c) le long d'une direction de fibre et (ii) un élément en vrac (200a ; 202b ; 204b ; 212a, 212b) entre chacune de la pluralité de bandes fibreuses (202a ; 210a, 210b, 210c), et
la liaison, à l'aide de l'outil de génération de maillage (110d), de la pluralité de plis ensemble sur la base de la séquence d'empilage par :

placement d'une pluralité d'éléments cohésifs (204a) entre chaque paire de plis adjacente, et
séparation (300) d'une couche intermédiaire entre chaque paire de plis adjacente en définissant une pluralité de caractéristiques de séparation de couche intermédiaire à proximité de moins de la totalité des bandes fibreuses incluses dans chaque paire de plis adjacente,
dans lequel le maillage FE définit un matériau stratifié composite ;
détermination (906), par le ou les processeurs (102), d'une réponse mécanique prévue du matériau stratifié composite par :

génération d'un modèle constitutif (110c) correspondant au matériau stratifié composite sur la base du maillage FE, et
introduction d'une valeur de déformation dans le modèle constitutif (110c) afin de générer la réponse mécanique prévue ;
détermination de caractéristiques optimales de matériaux pour un cas d'utilisation particulier à l'aide du modèle constitutif (110c) ; et
fonctionnement d'un équipement de fabrication afin de fabriquer la pièce, dans lequel au moins une bande fibreuse est appliquée dans le matériau stratifié composite en réponse à la réponse mécanique prévue afin de fabriquer le matériau stratifié composite avec ces caractéristiques de matériau pour produire un matériau stratifié composite conçu de manière optimale pour le cas d'utilisation particulier.

**2.** Procédé selon la revendication 1, dans lequel la liaison de la pluralité de plis comprend en outre :

la liaison, à l'aide de l'outil de génération de maillage (110d), de la pluralité de plis ensemble sur la base de la séquence d'empilage en plaçant la pluralité d'éléments cohésifs (204a) entre chaque paire de plis adjacente sur la base d'un ensemble de contraintes de liaison.

3. Procédé selon la revendication 2, dans lequel l'ensemble de contraintes de liaison comporte le fait de s'assurer que des nœuds de la pluralité d'éléments cohésifs sont situés sur des limites de fissures prédites de la matrice intra-pli.

4. Procédé selon l'une quelconque des revendications 1 à 3, dans lequel la séparation (300) de la couche intermédiaire entre chaque paire de plis adjacente comprend la définition d'une pluralité de caractéristiques de séparation de couche intermédiaire qui entourent chaque bande fibreuse (202a ; 210a, 210b, 210c) incluse dans chaque paire de plis adjacente respective.

5. Procédé selon la revendication 4, dans lequel la pluralité de caractéristiques de séparation de couche intermédiaire entoure chaque bande fibreuse (202a ; 210a, 210b, 210c) incluse dans chaque paire de plis adjacente respective en satisfaisant ou en dépassant une tolérance de largeur afin de déplacer les caractéristiques de séparation de couche intermédiaire vers des éléments en vrac (200a ; 202b ; 204b ; 212a, 212b) inclus dans chaque paire de plis adjacente respective.

6. Procédé selon l'une quelconque des revendications 4 ou 5, comprenant en outre :
le placement d'un élément cohésif (204a) au moins au niveau d'une intersection de chaque paire respective d'éléments de séparation de couche intermédiaire.

7. Procédé selon l'une quelconque des revendications 1 à 6, dans lequel le modèle constitutif (110c) comporte des conditions de mode mixte afin de modéliser une défaillance de délaminage dans le matériau stratifié composite.

8. Système de fabrication et/ou de réparation d'une pièce comprenant un matériau stratifié composite, le système comprenant un sous-système pour une modélisation semi-discrète de migration de délaminage de matériaux stratifiés composites, le système comprenant :

une interface utilisateur (104) ;
une mémoire (110) stockant un ensemble d'instructions lisibles par ordinateur comprenant au moins un outil de génération de maillage (110d) ; et
un processeur (102) en interface avec l'interface utilisateur (104) et la mémoire (110), et configuré pour exécuter l'ensemble d'instructions lisibles par ordinateur pour amener le processeur (102) à :

recevoir (902), en provenance d'un utilisateur, une géométrie d'échantillon et une séquence d'empilement d'échantillons ;
créer (904) un maillage d'éléments finis (FE) par :

génération, à l'aide d'un outil de génération de maillage (110d), d'une pluralité de plis formés chacun selon la géométrie d'échantillon, dans lequel chaque pli comporte (i) une pluralité de bandes fibreuses (202a ; 210a, 210b, 210c) le long d'une direction de fibre et (ii) un élément en vrac (200a ; 202b ; 204b ; 212a, 212b) entre chacune de la pluralité de bandes fibreuses (202a ; 210a, 210b, 210c), et
liaison à l'aide de l'outil de génération de maillage (110d), de la pluralité de plis ensemble sur la base de la séquence d'empilage par :

placement d'une pluralité d'éléments cohésifs (204a) entre chaque paire de plis adjacente, et
séparation (300) d'une couche intermédiaire entre chaque paire de plis adjacente en définissant une pluralité de caractéristiques de séparation de couche intermédiaire à proximité de moins de la totalité des bandes fibreuses incluses dans chaque paire de plis adjacente,
dans lequel le maillage FE définit un matériau stratifié composite ;
déterminer (906) une réponse mécanique prévue du matériau stratifié composite par :

génération d'un modèle constitutif (110c) correspondant au matériau stratifié composite sur la base du maillage FE, et
introduction d'une valeur de déformation dans le modèle constitutif (110c) afin de générer la réponse mécanique prévue ;
déterminer des caractéristiques optimales de matériaux pour un cas d'utilisation particulier à l'aide du modèle constitutif (110c) ; et

un équipement de fabrication configuré pour fabriquer la pièce, dans lequel au moins une bande fibreuse est appliquée dans le matériau stratifié composite en réponse à la réponse mécanique prévue afin de fabriquer le matériau stratifié composite avec ces caractéristiques de matériau pour produire un matériau stratifié composite conçu de manière optimale pour le cas d'utilisation particulier.

9. Système selon la revendication 8, dans lequel l'ensemble d'instructions lisibles par ordinateur amène en outre le processeur (102) à lier la pluralité de plis par :

liaison, à l'aide de l'outil de génération de maillage (110d), de la pluralité de plis ensemble sur la base de la séquence d'empilage en plaçant la pluralité d'éléments cohésifs (8204a) entre chaque paire de plis adjacente sur la base d'un ensemble de contraintes de liaison,

dans lequel l'ensemble de contraintes de liaison comporte le fait de s'assurer que des nœuds de la pluralité d'éléments cohésifs (204a) sont situés sur des limites de fissures prédites de la matrice intra-pli.

10. Système selon la revendication 8 ou 9, dans lequel l'ensemble d'instructions lisibles par ordinateur amène en outre le processeur (102) à lier la pluralité de plis par :

séparation (300) de la couche intermédiaire entre chaque paire de plis adjacente en définissant une pluralité de caractéristiques de séparation de couche intermédiaire qui entourent chaque bande fibreuse (202a ; 210a, 210b, 210c) incluse dans chaque paire de plis adjacente respective, et

placement d'un élément cohésif (204a) au moins au niveau d'une intersection de chaque paire respective d'éléments de séparation de couche intermédiaire.

11. Système selon la revendication 10, dans lequel la pluralité de caractéristiques de séparation de couche intermédiaire entoure chaque bande fibreuse (202a ; 210a, 210b, 210c) incluse dans chaque paire de plis adjacente respective en satisfaisant ou en dépassant une tolérance de largeur afin de déplacer les caractéristiques de séparation de couche intermédiaire vers des éléments en vrac inclus dans chaque paire de plis adjacente respective.

12. Système selon l'une quelconque des revendications 8 à 11, dans lequel le modèle constitutif (110c) comporte des conditions de mode mixte afin de modéliser une défaillance de délaminage dans le matériau stratifié composite.

13. Support de stockage non transitoire lisible par ordinateur sur lequel est stocké un ensemble d'instructions, exécutables par au moins un processeur (102), pour une modélisation semi-discrète de migration de délaminage de matériaux stratifiés composites, les instructions comprenant :

des instructions permettant de recevoir (902), en provenance d'un utilisateur, une géométrie d'échantillon et une séquence d'empilage d'échantillons ;

des instructions permettant de créer (904) un maillage d'éléments finis (FE) par :

génération, à l'aide d'un outil de génération de maillage (110d), d'une pluralité de plis formés chacun selon la géométrie d'échantillon, dans lequel chaque pli comporte (i) une pluralité de bandes fibreuses (202a ; 210a, 210b, 210c) le long d'une direction de fibre et (ii) un élément en vrac (200a ; 202b ; 204b ; 212a, 212b) entre chacune de la pluralité de bandes fibreuses (202a ; 210a, 210b, 210c), et

liaison à l'aide de l'outil de génération de maillage (110d), de la pluralité de plis ensemble sur la base de la séquence d'empilage par :

placement d'une pluralité d'éléments cohésifs (204a) entre chaque paire de plis adjacente, et

séparation (300) d'une couche intermédiaire entre chaque paire de plis adjacente en définissant une pluralité de caractéristiques de séparation de couche intermédiaire à proximité de moins de la totalité des bandes fibreuses incluses dans chaque paire de plis adjacente,

dans lequel le maillage FE définit un matériau stratifié composite ;

des instructions permettant de déterminer (906) une réponse mécanique prévue du matériau stratifié composite par :

génération d'un modèle constitutif (110c) correspondant au matériau stratifié composite sur la base du maillage FE, et

introduction d'une valeur de déformation dans le modèle constitutif (110c) afin de générer la réponse mécanique prévue ; et

des instructions permettant de déterminer des caractéristiques optimales de matériau pour un cas d'utilisation particulier à l'aide du modèle constitutif (110c) et permettant d'amener un équipement de fabrication à fabriquer une pièce comprenant un matériau stratifié composite respectif, dans lequel au moins une bande fibreuse dans le matériau stratifié composite respectif est basée sur la réponse mécanique prédite pour fabriquer le matériau stratifié composite avec ces caractéristiques de matériau afin de produire un matériau stratifié composite configuré de manière optimale pour le cas d'utilisation particulier.

14. Support de stockage non transitoire lisible par ordinateur selon la revendication 13, dans lequel l'ensemble d'instructions comprend en outre :

des instructions permettant de lier, à l'aide de l'outil de génération de maillage (110d), la pluralité de plis ensemble sur la base de la séquence d'empilage en plaçant la pluralité d'éléments cohésifs (204a) entre chaque paire de plis adjacente sur la base d'un ensemble de contraintes de liaison,

dans lequel l'ensemble de contraintes de liaison comporte le fait de s'assurer que des nœuds de la pluralité d'éléments cohésifs (204a) sont situés sur des limites de fissures prédites de la matrice intra-pli.

15. Support de stockage non transitoire lisible par ordinateur selon la revendication 13 ou 14, dans lequel le jeu d'instructions comprend en outre :

des instructions permettant de séparer (300) la couche intermédiaire entre chaque paire de plis adjacente en définissant une pluralité de caractéristiques de séparation de couche intermédiaire qui entourent chaque bande fibreuse (202a ; 210a, 210b, 210c) incluse dans chaque paire de plis adjacente respective ; et

des instructions permettant de placer un élément cohésif au moins au niveau d'une intersection de chaque paire respective d'éléments de séparation de couche intermédiaire,

dans lequel la pluralité de caractéristiques de séparation de couche intermédiaire entoure chaque bande fibreuse (202a ; 210a, 210b, 210c) incluse dans chaque paire de plis adjacente respective en satisfaisant ou en dépassant une tolérance de largeur afin de déplacer les caractéristiques de séparation de couche intermédiaire vers des éléments en vrac (200a ; 202b ; 204b ; 212a, 212b) inclus dans chaque paire de plis adjacente respective.

**FIG. 1A**

**FIG. 1B**

EP 4 181 008 B1

FIG. 2C

204

204a

204a

204b

204b

202a

202b

202

FIG. 2B

200

200a

200a

200a

FIG. 2A

208

210b

212a

210c

220

212b

210a

110

110b

STRUCTURED HEX MESHING ALGORITHM

110a

FREE HEX-DOMINATED ADVANCING FRONT MESHING ALGORITHM

110d

MESH GENERATION TOOL

206

FIBROUS STRIP WIDTH

FIBROUS STRIP SPACING

FIG. 2D

**FIG. 3A**

**FIG. 3B**

**FIG. 4A**

**FIG. 4B**

**FIG. 4C**

**FIG. 4D**

EP 4 181 008 B1

FIG. 5

**FIG. 6**

FIG. 7A

FIG. 7B

FIG. 7C

FIG. 7D

FIG. 7E

EP 4 181 008 B1

FIG. 8B

Cohesive damage
(Avg: 75%)
+1.000e+00
+9.000e-01
+8.000e-01
+7.000e-01
+6.000e-01
+5.000e-01
+4.000e-01
+3.000e-01
+2.000e-01
+1.000e-01
+0.000e+00

FIG. 8A

Matrix damage
(Avg: 75%)
+1.000e+00
+9.000e-01
+8.000e-01
+7.000e-01
+6.000e-01
+5.000e-01
+4.000e-01
+3.000e-01
+2.000e-01
+1.000e-01
+0.000e+00

822a

832a

822b

832b

822c

832c

FIG. 8C

FIG. 8D

900

Start

902

Receive, from a user, a specimen geometry and a
specimen stacking sequence

904

Create a finite-element mesh by generating, using a smesh generation tool,
a plurality of plies each shape according to the specimen geometry and
the plurality of plies together based on the stacking sequence by placing
a plurality of cohesive elements between each adjacent pair of plies

906

Determine a predicted mechanical response of the composite laminate
material by: generating a constitutive model corresponding to the composite
laminate material based on the FE mesh, and inputting a strain value
to the constitutive model to generate the predicted mechanical response

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MINH HOANG NGUYEN** ; **ANTHONY M. WAAS**. A novel mode-dependent and probabilistic semi-discrete damage model for progressive failure analysis of composite laminates - Part I: Meshing strategy and mixed-mode law. *COMPOSITES PART C: OPEN ACCESS*, 01 November 2020, vol. 3, ISSN 2666-6820
- **MINH HOANG NGUYEN** ; **ANTHONY M. WAAS**. A novel mode-dependent and probabilistic semi-discrete damage model for progressive failure analysis of composite laminates - Part II: Applications to unnotched and open-hole tensile specimens. *COMPOSITES PART C: OPEN ACCESS*, 01 November 2020, vol. 3, ISSN 2666-6820

- Detailed experimental and numerical investigation of single-edge notched tensile cross-ply laminates. **MINH HOANG NGUYEN et al.** COMPOSITE STRUCTURES. ELSEVIER SCIENCE LTD, 08 October 2021, vol. 279
- Compressive damage modeling of fiber-reinforced composite laminates using 2D higher-order layer-wise models. **NAGARAJ M. H. et al.** COMPOSITES PART B. ELSEVIER, 17 March 2021, vol. 215